# EUROPÄISCHE PATENTANMELDUNG

(11) **EP 1 983 243 A1**
(43) Veröffentlichungstag der Anmeldung: **22.10.2008**
(21) Anmeldenummer: 08002776.6
(22) Anmeldetag: 14.02.2008
(51) Int. Cl.: F16L 11/115

(54) **Stabilisierungsanordnung für einen Wellschlauch**

(30) Priorität: 17.04.2007 DE 102007018035
(71) Anmelder: VERITAS AG, 63571 Gelnhausen (DE)
(72) Erfinder: Cöl, Isa, 60385 Frankfurt (DE); Niessner, Heiko, 63599 Biebergemünd (DE); Hempel, Werner, 61130 Nidderau (DE); Seyler, Andreas, 63584 Gründau (DE); Rösch, Thomas, 63589 Linsengericht (DE)
(74) Vertreter: Grünecker, Kinkeldey, Stockmair & Schwanhäusser Anwaltssozietät

(57) **Zusammenfassung**

Die Erfindung betrifft eine Stabilisierungsanordnung (1) für einen Wellschlauch (2). Um eine herkömmliche Stabilisierungsanordnung mit vorgegebener Struktur dahingehend zu verbessern, dass sie flexibler einsetzbar ist, stellt die Erfindung eine Stabilisierungsanordnung (1) für einen Wellschlauch (2) bereit, umfassend zumindest zwei Halteeinrichtungen (11), wobei jede der zwei Halteeinrichtungen (11) derart anordnungsbar ist, dass sie den Wellschlauch (2) in Umfangsrichtung zumindest abschnittsweise umgibt, und zumindest eine Verbindungseinrichtung (12), welche mit jeder der zwei Halteeinrichtungen (11) verbindbar ist, um die Halteeinrichtungen (11) quer zur Umfangsrichtung des Wellschlauchs (2) zu verbinden.

## Beschreibung

Die Erfindung betrifft eine Stabilisierungsanordnung für einen Wellschlauch.

Eine Stabilisierungsanordnung für einen Wellschlauch ist aus der DE 10 2004 038 087 bekannt.

Diese bekannte Stabilisierungsanordnung weist eine vorgegebene Struktur auf, so dass die Stabilisierungsanordnung nicht hinreichend flexibel einsetzbar ist.

Der Erfindung liegt die Aufgabe zugrunde, die bekannte Stabilisierungsanordnung dahingehend zu verbessern, dass sie flexibler einsetzbar ist.

Zur Lösung dieser Aufgabe stellt die Erfindung die Stabilisierungsanordnung für einen Wellschlauch nach Anspruch 1 bereit, umfassend: zumindest zwei Halteeinrichtungen, wobei jede der zwei Halteeinrichtungen derart anordnungsbar ist, dass sie den Wellschlauch in Umfangsrichtung des Wellschlauchs zumindest abschnittsweise umgibt, und zumindest eine Verbindungseinrichtung, welche mit jeder der zwei Halteeinrichtungen verbindbar ist, um die Halteeinrichtungen quer zur Umfangsrichtung des Wellschlauchs zu verbinden. Die erfindungsgemäße Stabilisierungsanordnung ist modular aufbaubar und auf den gewünschten Einsatzzweck abstimmbar. Nach Art eines Baukastens können verschiedene Halteeinrichtungen mit verschiedenen Verbindungseinrichtungen kombiniert werden. Die erfindungsgemäße Stabilisierungsanordnung ist hinreichend flexibel und kann bei verschiedenen Wellschläuchen mit unterschiedlichen Durchmessern, Längen, Krümmungen, etc. zur Anwendung kommen.

Eine bevorzugte Ausführung der Erfindung betrifft die Stabilisierungsanordnung nach der vorangehend genannten Ausführung, wobei die Verbindungseinrichtung lösbar mit jeder der zwei Halteeinrichtungen verbindbar ist. Diese Maßnahme hat den Vorteil, dass ein defektes Bauteil im Versagensfall leicht austauschbar ist, oder die Stabilisierungsanordnung zur Wartung oder Reparatur des Wellschlauchs leicht austauschbar ist. Zudem kann die zerstörungsfrei lösbare Stabilisierungsanordnung bei Bedarf wieder verwendet werden oder recycelt werden.

Eine bevorzugte Ausführung der Erfindung betrifft die Stabilisierungsanordnung nach zumindest einer der vorangegangenen Ausführungen, wobei die Stabilisierungsanordnung zwischen einer Lösestellung, in welcher die Verbindung zumindest einer der Halteeinrichtungen gegenüber der Verbindungseinrichtung lösbar ist, und einer Sicherungsstellung, in welcher die Verbindung der zumindest einen der Halteeinrichtungen gegenüber der Verbindungseinrichtung gesichert ist, überführbar ist. Diese Maßnahme hat den Vorteil, dass sie die Handhabung der Stabilisierungsanordnung bei der Montage erleichtert.

Eine bevorzugte Ausführung der Erfindung betrifft die Stabilisierungsanordnung nach zumindest einer der vorangegangenen Ausführungen, wobei sich die Stabilisierungsanordnung in der Sicherungsstellung befindet, wenn eine einen Innenumfang der Stabilisierungsanordnung vergrößernde Kraft auf die Stabilisierungsanordnung ausgeübt wird. Diese Maßnahme hat den Vorteil, dass sich die Stabilisierungsanordnung selbsttätig sichert, so dass eine Selbstsicherung verwirklicht wird, wenn sich der Wellschlauch beispielsweise bei Erhöhung des Innendrucks gegenüber dem Aussendruck verformt. So kann ein unbeabsichtigtes Lösen der Stabilisierungsanordnung verhindert und die bestimmungsgemäße Funktion der Stabilisierungsanordnung sichergestellt werden.

Eine bevorzugte Ausführung der Erfindung betrifft die Stabilisierungsanordnung nach zumindest einer der vorangegangenen Ausführungen, wobei sich die Stabilisierungsanordnung in der Sicherungsstellung befindet, wenn eine einen Abstand der Halteeinrichtungen vergrößernde Kraft auf die Halteeinrichtungen ausgeübt wird. Diese Maßnahme hat den Vorteil, dass sich die Stabilisierungsanordnung selbsttätig sichert, wenn sich der Wellschlauch bei Erhöhung des Innendrucks gegenüber dem Aussendruck in Längsrichtung dehnt. Auch dadurch kann ein unbeabsichtigtes Lösen der Stabilisierungsanordnung verhindert und die bestimmungsgemäße Funktion der Stabilisierungsanordnung sichergestellt werden.

Eine bevorzugte Ausführung der Erfindung betrifft die Stabilisierungsanordnung nach zumindest einer der vorangegangenen Ausführungen, wobei sich die Stabilisierungsanordnung in der Lösestellung befindet, wenn eine einen Innenumfang der Stabilisierungsanordnung verkleinernde Kraft auf die Stabilisierungsanordnung ausgeübt wird. Diese Maßnahme hat den Vorteil, dass die Stabilisierungsanordnung z.B. bei Aufbringen einer den Wellschlauch in radialer Richtung zusammenknautschenden Kraft leicht lösbar ist.

Eine bevorzugte Ausführung der Erfindung betrifft die Stabilisierungsanordnung nach zumindest einer der vorangegangenen Ausführungen, wobei sich die Stabilisierungsanordnung in der Lösestellung befindet, wenn eine einen Abstand der Halteeinrichtungen verkleinernde Kraft auf die Halteeinrichtungen ausgeübt wird. Diese Maßnahme hat den Vorteil, dass die Stabilisierungsanordnung z.B. bei Aufbringen einer den Wellschlauch in axialer Richtung stauchenden Kraft leicht lösbar ist.

Eine bevorzugte Ausführung der Erfindung betrifft die Stabilisierungsanordnung nach zumindest einer der vorangegangenen Ausführungen, wobei jede der Halteeinrichtungen in einem Wellental des Wellschlauchs anordnungsbar ist, und wobei die Verbindungseinrichtung derart anordnungsbar ist, um zumindest einen Wellenberg des Wellschlauchs zu überbrücken. Diese Maßnahme hat den Vorteil, dass die Positionen der Halteeinrichtungen und der Verbindungseinrichtung gegenüber dem Wellschlauch besonders einfach und sicher festlegbar sind. Zudem stellt sich die Baugruppe aus Wellschlauch und Stabilisierungsanordnung besonders kompakt dar, wenn die Halteeinrichtungen in den Wellenzwischenräumen bzw. Wellentälern angeordnet sind.

Eine bevorzugte Ausführung der Erfindung betrifft die Stabilisierungsanordnung nach zumindest einer der vorangegangenen Ausführungen, wobei der Innenumfang der Stabilisierungsanordnung verstellbar, vorzugsweise stufenweise verstellbar ist. Diese Maßnahme hat den Vorteil, dass die Stabilisierungsanordnung bei unterschiedlichen Wellschläuchen mit unterschiedlichen Durchmessern zum Einsatz kommen kann, so dass die Stabilisierungsanordnung flexibler einsetzbar ist.

Eine bevorzugte Ausführung der Erfindung betrifft die Stabilisierungsanordnung nach zumindest einer der vorangegangenen Ausführungen, wobei der Innenumfang der Stabilisierungsanordnung im verbundenen Zustand der Verbindungseinrichtung mit zumindest einer der Halteeinrichtungen verstellbar, vorzugsweise stufenweise verstellbar ist. Diese Maßnahme hat den Vorteil, dass die Stabilisierungsanordnung in einem ersten Montageschritt um den Umfang des Wellschlauchs angeordnet werden kann, und dass die Stabilisierungsanordnung in einem zweiten Montageschritt genau auf den Umfang des Wellschlauchs abgestimmt werden kann. Folglich erleichtert diese Maßnahme die Montage der Stabilisierungsanordnung.

Eine bevorzugte Ausführung der Erfindung betrifft die Stabilisierungsanordnung nach zumindest einer der vorangegangenen Ausführungen, wobei der Innenumfang jeder der zwei Halteeinrichtungen verstellbar, vorzugsweise stufenweise verstellbar, ist. Diese Maßnahme hat den Vorteil, dass die Stabilisierungsanordnung bei einem Wellschlauch mit verschiedenen Abschnitten, die unterschiedliche Durchmesser aufweisen, zum Einsatz kommen kann. Folglich bewirkt diese Maßnahme, dass die Stabilisierungsanordnung flexibler einsetzbar ist.

Eine bevorzugte Ausführung der Erfindung betrifft die Stabilisierungsanordnung nach zumindest einer der vorangegangenen Ausführungen, wobei die Halteeinrichtungen und die Verbindungseinrichtung nach Haken-Öse-Prinzip miteinander verbindbar sind. Diese Maßnahme hat den Vorteil, dass die Halteeinrichtungen und die Verbindungseinrichtung durch eine einfache Handhabung miteinander verbindbar und ebenso durch eine einfache Handhabung wieder voneinander lösbar sind.

Eine bevorzugte Ausführung der Erfindung betrifft die Stabilisierungsanordnung nach zumindest einer der vorangegangenen Ausführungen, wobei zumindest eine der Halteeinrichtungen zumindest zwei im Wesentlichen bogenförmige Haltesegmente umfasst, die in Umfangsrichtung des Wellschlauchs anordnungsbar sind. Diese Maßnahme hat den Vorteil, dass die Haltesegmente gesondert um den Umfang des Wellschlauchs anordnungsbar sind, und damit weder der Wellschlauch noch die Halteeinrichtung bzw. die Haltesegmente bei der Montage der Stabilisierungsanordnung verformt werden müssen. Folglich vereinfacht diese Maßnahme die Handhabung der Stabilisierungsanordnung bei der Montage.

Eine bevorzugte Ausführung der Erfindung betrifft die Stabilisierungsanordnung nach zumindest einer der vorangegangenen Ausführungen, wobei die Haltesegmente derart anordnungsbar sind, um sich um den Wellschlauch zu schließen. Diese Maßnahme hat den Vorteil, dass die Haltesegmente in einem ersten Montageschritt um den Umfang des Wellschlauchs geschlossen werden können und in einem zweiten Montageschritt mit der Verbindungseinrichtung verbunden werden können. Folglich erleichtert diese Maßnahme die Montage der Stabilisierungsanordnung.

Eine bevorzugte Ausführung der Erfindung betrifft die Stabilisierungsanordnung nach zumindest einer der vorangegangenen Ausführungen, wobei die Haltesegmente unmittelbar miteinander verbindbar sind. Diese Maßnahme hat den Vorteil, dass ein weiteres Element zur Montage der Haltesegmente verzichtbar ist, so dass der Aufbau der Stabilisierungsanordnung vereinfacht wird.

Eine bevorzugte Ausführung der Erfindung betrifft die Stabilisierungsanordnung nach zumindest einer der vorangegangenen Ausführungen, wobei die Haltesegmente mittelbar über ein flexibles Halteelement verbindbar sind. Diese Maßnahme hat den Vorteil, dass sowohl die Haltesegmente als auch das Halteelement einfacher und zweckgerichteter ausgebildet werden können, weil die Funktion der Haltesegmente, die dem optimalen Sitz der Stabilisierungsanordnung auf dem Wellschlauch dienen, von der Funktion des Halteelements, welches die Haltesegmente mittelbar um den vollen Umfang des Wellschlauchs verbindet, getrennt wird. Beispielsweise müssen an den Haltesegmenten keine Eingriffsabschnitte vorgesehen werden, um die Haltesegmente unmittelbar zu verbinden.

Eine bevorzugte Ausführung der Erfindung betrifft die Stabilisierungsanordnung nach zumindest einer der vorangegangenen Ausführungen, wobei die Haltesegmente derart anordnungsbar sind, um einen um den Umfang des Wellschlauchs geschlossenen Ring zu bilden. Diese Maßnahme hat den Vorteil, dass die Haltesegmente in dieser Anordnung eine besonders stabile und steife Struktur aufweisen.

Eine bevorzugte Ausführung der Erfindung betrifft die Stabilisierungsanordnung nach zumindest einer der vorangegangenen Ausführungen, wobei die Haltesegmente nach Haken-Öse-Prinzip miteinander verbindbar sind. Diese Maßnahme hat den Vorteil, dass die Haltesegmente durch eine einfache Handhabung miteinander verbindbar und ebenso durch eine einfache Handhabung wieder voneinander lösbar sind.

Eine bevorzugte Ausführung der Erfindung betrifft die Stabilisierungsanordnung nach zumindest einer der vorangegangenen Ausführungen, wobei die Haltesegmente nach Haken-Öse-Prinzip mit der Verbindungseinrichtung verbindbar sind. Diese Maßnahme hat den Vorteil, dass die Haltesegmente und die Verbindungseinrichtung durch eine einfache Handhabung miteinander verbindbar und ebenso durch eine einfache Handhabung wieder voneinander lösbar sind.

Eine bevorzugte Ausführung der Erfindung betrifft die Stabilisierungsanordnung nach zumindest einer der vorangegangenen Ausführungen, wobei die Haltesegmente eine auf eine Kontur des Wellschlauchs im Wesentlichen abgestimmte Kontur aufweisen. Diese Maßnahme hat den Vorteil, dass von den Haltesegmenten verursachte Druckstellen oder Schädigungen des Wellschlauchmaterials weitgehend vermieden werden.

Eine bevorzugte Ausführung der Erfindung betrifft die Stabilisierungsanordnung nach zumindest einer der vorangegangenen Ausführungen, wobei die Haltesegmente ein rinnenförmiges oder U-förmiges Querschnittsprofil aufweisen. Diese Maßnahme hat ebenfalls den Vorteil, dass von den Haltesegmenten verursachte Druckstellen oder Schädigungen des Wellschlauchmaterials weitgehend vermieden werden. Die Haltesegmente weisen gemäß dieser Maßnahme keine scharfen Kanten auf, die bei erheblicher Beanspruchung der Stabilisierungsanordnung, z.B. bei Ausbauchen des Wellschlauchs in radialer Richtung, gegen den Umfang des Wellschlauchs gedrückt werden könnten.

Eine bevorzugte Ausführung der Erfindung betrifft die Stabilisierungsanordnung nach zumindest einer der vorangegangenen Ausführungen, wobei die Verbindungseinrichtung eine auf eine Kontur des Wellschlauchs im Wesentlichen abgestimmte Kontur aufweist. Diese Maßnahme hat den Vorteil, dass von der Verbindungseinrichtung verursachte Druckstellen oder Schädigungen des Wellschlauchmaterials weitgehend vermieden werden.

Eine bevorzugte Ausführung der Erfindung betrifft die Stabilisierungsanordnung nach zumindest einer der vorangegangenen Ausführungen, wobei ein Verbindungsabschnitt der Verbindungseinrichtung zwischen der Halteeinrichtung und dem Wellschlauch festlegbar ist. Diese Maßnahme hat den Vorteil, dass der Verbindungsabschnitt bei Dehnung des Wellschlauchs in radialer Richtung gegen die Halteeinrichtung gedrückt wird, und die Verbindung zwischen dem Verbindungsabschnitt und der Halteeinrichtung bei Beanspruchung der Stabilisierungsanordnung selbsttätig verbessert wird.

Eine bevorzugte Ausführung der Erfindung betrifft die Stabilisierungsanordnung nach zumindest einer der vorangegangenen Ausführungen, wobei ein Verbindungsabschnitt der Verbindungseinrichtung zwischen einem flexiblen Halteelement und einem Haltesegment einer der Halteeinrichtungen festlegbar ist. Diese Maßnahme hat ebenfalls den Vorteil, dass der Verbindungsabschnitt bei Dehnung des Wellschlauchs in radialer Richtung gegen das Halteelement gedrückt wird. Folglich wird die Verbindung zwischen dem Verbindungsabschnitt und der Halteeinrichtung bei Beanspruchung der Stabilisierungsanordnung selbsttätig verbessert, allerdings ohne dass sich der Verbindungsabschnitt unmittelbar in Kontakt mit dem Wellschlauch befindet und Druckstellen auf dem Wellschlauch hinterlässt.

Eine bevorzugte Ausführung der Erfindung betrifft die Stabilisierungsanordnung nach zumindest einer der vorangegangenen Ausführungen, wobei eine Verbindung der Verbindungseinrichtung mit einer der Halteeinrichtungen kraftschlüssig und/oder reibschlüssig und/oder formschlüssig ist.

Eine bevorzugte Ausführung der Erfindung betrifft die Stabilisierungsanordnung nach zumindest einer der vorangegangenen Ausführungen, wobei die Verbindungseinrichtung mit Hilfe eines Verbindungselementes an einer der Halteeinrichtungen festlegbar ist. Diese Maßnahme hat den Vorteil, dass weder an der Verbindungseinrichtung noch an einer der Halteeinrichtungen Verbindungsmittel vorgesehen werden müssen.

Eine bevorzugte Ausführung der Erfindung betrifft die Stabilisierungsanordnung nach zumindest einer der vorangegangenen Ausführungen, wobei zumindest eine der Halteeinrichtungen einen Federabschnitt aufweist, auf welchen ein Verbindungsabschnitt der Verbindungseinrichtung aufsteckbar ist. Diese Maßnahme hat den Vorteil, dass die Verbindungseinrichtung und die Halteeinrichtung durch eine einfache Handhabung miteinander verbindbar sind. Wenn der Verbindungsabschnitt über den Federabschnitt geschoben wird, wird der Federabschnitt zusammengedrückt. Wenn der Verbindungsabschnitt vollständig aufgesteckt ist, spreizt sich der Federabschnitt und hält den Verbindungsabschnitt aufgrund seiner Federkraft fest. Die Verbindung der Verbindungseinrichtung mit der Halteeinrichtung durch den Federabschnitt ist durch erneutes Zusammendrücken des Federabschnitts und Schieben des Verbindungsabschnitts über den Federabschnitt wieder lösbar.

Eine bevorzugte Ausführung der Erfindung betrifft die Stabilisierungsanordnung nach zumindest einer der vorangegangenen Ausführungen, wobei der Federabschnitt einen pilzförmigen Kopf aufweist. Diese Maßnahme hat den Vorteil, dass die Verbindung der Verbindungseinrichtung mit der Halteeinrichtung durch den Federabschnitt selbsttätig gesichert wird. Wenn der Verbindungsabschnitt über den pilzförmigen Kopf des Federabschnitts geschoben wird, wird der Federabschnitt zusammengedrückt. Wenn der Verbindungsabschnitt vollständig aufgesteckt ist, spreizt sich der Kopf des Federabschnitts und hält den Verbindungsabschnitt aufgrund seiner Federkraft fest. Die Verbindung der Verbindungseinrichtung mit der Halteeinrichtung durch den Federabschnitt ist durch erneutes Zusammendrücken des Federabschnitts und Schieben des Verbindungsabschnitts über den pilzförmigen Kopf des Federabschnitts wieder lösbar.

Eine bevorzugte Ausführung der Erfindung betrifft die Stabilisierungsanordnung nach zumindest einer der vorangegangenen Ausführungen, wobei eine Halteeinrichtung mit zumindest zwei Verbindungseinrichtungen verbindbar ist. Diese Maßnahme hat den Vorteil, dass eine beliebige Anzahl von Halteeinrichtungen kettenförmig verbunden werden kann, so dass die Stabilisierungsanordnung quer zur Umfangsrichtung des Wellschlauchs beliebig erweiterbar ist.

Eine bevorzugte Ausführung der Erfindung betrifft die Stabilisierungsanordnung nach zumindest einer der vorangegangenen Ausführungen, wobei zumindest zwei Verbindungsabschnitte mit einem Federabschnitt verbindbar sind. Diese Maßnahme hat den Vorteil, dass lediglich ein Verbindungsmittel in Gestalt des Federabschnitts bereitgestellt werden muss, um die Verbindung einer Halteeinrichtung mit zwei Verbindungseinrichtungen zu bewerkstelligen.

Eine bevorzugte Ausführung der Erfindung betrifft die Stabilisierungsanordnung nach zumindest einer der vorangegangenen Ausführungen, wobei die Stabilisierungsanordnung zwei Verbindungseinrichtungen und jede der beiden Halteeinrichtungen zwei bogenförmige Haltesegmente umfasst, wobei jede Verbindungseinrichtung mit beiden Haltesegmenten der beiden Halteeinrichtungen verbindbar ist. Diese Maßnahme hat den Vorteil, dass die Stabilisierungsanordnung eine besonders kompakte und stabile Struktur erhält.

Eine bevorzugte Ausführung der Erfindung betrifft die Stabilisierungsanordnung nach zumindest einer der vorangegangenen Ausführungen, wobei die Haltesegmente der beiden Halteeinrichtungen durch die Verbindungseinrichtung sowohl in Umfangsrichtung des Wellschlauchs als auch quer zur Umfangsrichtung des Wellschlauchs verbindbar sind. Diese Maßnahme hat den Vorteil, dass die Verbindungseinrichtung eine Doppelfunktion erfüllt und dass auf gesonderte Verbindungsmittel zum Verbinden der Haltesegmente in Umfangsrichtung des Wellschlauchs und quer zur Umfangsrichtung des Wellschlauchs verzichtet werden kann. Die Stabilisierungsanordnung erhält so einen besonders einfachen Aufbau, was sich positiv auf die Material- und Fertigungskosten sowie den Montageaufwand auswirkt.

Eine bevorzugte Ausführung der Erfindung betrifft die Stabilisierungsanordnung nach zumindest einer der vorangegangenen Ausführungen, wobei die Verbindungseinrichtung erste und zweite Abschnitte aufweist, wobei die Stabilisierungsanordnung einen kleineren Innenumfang aufweist, wenn die Haltesegmente mit den ersten Abschnitten verbunden sind, und einen größeren Innenumfang aufweist, wenn die Haltesegmente mit den zweiten Abschnitten verbunden sind. Diese Maßnahme hat den Vorteil, dass durch ein verhältnismäßig einfaches Merkmal eine Verstellbarkeit und damit eine hohe Flexibilität der Stabilisierungsanordnung bewerkstelligt wird.

Eine bevorzugte Ausführung der Erfindung betrifft die Stabilisierungsanordnung nach zumindest einer der vorangegangenen Ausführungen, wobei der Innenumfang der Stabilisierungsanordnung durch Bewegung der Verbindungseinrichtung gegenüber einer der Halteeinrichtungen veränderbar ist. Diese Maßnahme hat den Vorteil, dass die Stabilisierungsanordnung durch einfache Handhabung im verbundenen Zustand der Verbindungseinrichtung und einer der Halteeinrichtungen auf den Umfang des Wellschlauchs abstimmbar ist.

Eine bevorzugte Ausführung der Erfindung betrifft die Stabilisierungsanordnung nach zumindest einer der vorangegangenen Ausführungen, wobei zumindest eine der Halteeinrichtungen wenigstens einen von der Verbindungseinrichtung durchsetzbaren Ösen-abschnitt aufweist. Diese Maßnahme hat den Vorteil, dass die Verbindungseinrichtung und die Halteeinrichtung in besonders einfacher Weise gemäß Nadel-Faden-Prinzip verbindbar sind.

Eine bevorzugte Ausführung der Erfindung betrifft die Stabilisierungsanordnung nach zumindest einer der vorangegangenen Ausführungen, wobei der Ösenabschnitt quer zur Umfangsrichtung des Wellschlauchs von der Verbindungseinrichtung durchsetzbar ist. Diese Maßnahme hat den Vorteil, dass die Ösenabschnitte mehrerer, auf dem Wellschlauch benachbart angeordneter Halteeinrichtungen in gerader Linie von der Verbindungseinrichtung durchsetzbar sind.

Eine bevorzugte Ausführung der Erfindung betrifft die Stabilisierungsanordnung nach zumindest einer der vorangegangenen Ausführungen, wobei die Verbindungseinrichtung strangförmig und plastisch verformbar ausgebildet ist. Diese Maßnahme hat den Vorteil, dass die Verbindungseinrichtung für den jeweiligen Anwendungsfall entsprechend formbar ist und beispielsweise einer Krümmung des Wellschlauchs folgen kann.

Eine bevorzugte Ausführung der Erfindung betrifft die Stabilisierungsanordnung nach zumindest einer der vorangegangenen Ausführungen, wobei die Verbindungseinrichtung flexibel und/oder biegsam ausgebildet ist. Diese Maßnahme hat ebenfalls den Vorteil, dass die Verbindungseinrichtung für den jeweiligen Anwendungsfall entsprechend formbar ist.

Eine bevorzugte Ausführung der Erfindung betrifft die Stabilisierungsanordnung nach zumindest einer der vorangegangenen Ausführungen, wobei die Verbindungseinrichtung als Draht ausgebildet ist. Diese Maßnahme hat ebenfalls den Vorteil, dass sich ein Draht, vorzugsweise Metalldraht, kostengünstig bereitstellen lässt.

Eine bevorzugte Ausführung der Erfindung betrifft die Stabilisierungsanordnung nach zumindest einer der vorangegangenen Ausführungen, wobei die Verbindungseinrichtung Abschnitte aufweist, die in den Ösenabschnitten der Halteeinrichtungen festlegbar sind. Diese Maßnahme hat den Vorteil, dass der bestimmungsgemäße Maximalabstand der Halteeinrichtungen zueinander gesichert ist, wobei sich die Halteeinrichtungen aber geringfügig gegeneinander bewegen können, um bestimmte Verformungen des Wellschlauchs besser zu kompensieren.

Eine bevorzugte Ausführung der Erfindung betrifft die Stabilisierungsanordnung nach zumindest einer der vorangegangenen Ausführungen, wobei die Verbindungseinrichtung derart anordnungsbar und/oder verformbar ist, dass sie zumindest eine der Halteeinrichtungen im Wesentlichen umgreift. Diese Maßnahme hat den Vorteil, dass die Verbindung der Verbindungseinrichtung und einer der Halteeinrichtungen besonders gesichert ist.

Eine bevorzugte Ausführung der Erfindung betrifft die Stabilisierungsanordnung nach zumindest einer der vorangegangenen Ausführungen, wobei zumindest eine der Halteeinrichtungen einen geschlossenen Ring bildet. Diese Maßnahme hat den Vorteil, dass die Stabilisierungsanordnung eine besonders kompakte und steife Struktur aufweist.

Die bevorzugten Ausführungsbeispiele der Erfindung werden nachstehend mit Bezug auf die beiliegenden Zeichnungen erläutert.

### Kurze Beschreibung der Zeichnungen

- Fig. 1a: zeigt eine Halteeinrichtung einer Stabilisierungsanordnung gemäß einem ersten Ausführungsbeispiel der Erfindung.
- Fig. 1b: zeigt eine Verbindungseinrichtung der Stabilisierungsanordnung gemäß dem ersten Ausführungsbeispiel der Erfindung.
- Fig. 1c: zeigt eine perspektivische Ansicht eines Wellschlauchs und einer Stabilisierungsanordnung gemäß dem ersten Ausführungsbeispiel der Erfindung im unverbundenen Zustand.
- Fig. 1d: zeigt eine perspektivische Ansicht des Wellschlauchs und der Stabilisierungsanordnung gemäß dem ersten Ausführungsbeispiel der Erfindung im verbundenen Zustand.
- Fig. 2a: zeigt eine Halteeinrichtung einer Stabilisierungsanordnung gemäß einem zweiten Ausführungsbeispiel der Erfindung.
- Fig. 2b: zeigt ein Halteelement der Halteeinrichtung der Stabilisierungsanordnung gemäß dem zweiten Ausführungsbeispiel der Erfindung.
- Fig. 2c: zeigt eine Verbindungseinrichtung der Stabilisierungsanordnung gemäß dem zweiten Ausführungsbeispiel der Erfindung.
- Fig. 2d: zeigt die Stabilisierungsanordnung gemäß dem zweiten Ausführungsbeispiel der Erfindung im verbundenen Zustand.
- Fig. 2e: zeigt eine perspektivische Ansicht eines Wellschlauchs mit der darauf angeordneten Stabilisierungsanordnung gemäß dem zweiten Ausführungsbeispiel der Erfindung im verbundenen Zustand.
- Fig. 3a: zeigt ein Haltesegment einer Halteeinrichtung einer Stabilisierungsanordnung gemäß einem dritten Ausführungsbeispiel der Erfindung.
- Fig. 3b: zeigt eine Verbindungseinrichtung der Stabilisierungsanordnung gemäß dem dritten Ausführungsbeispiel der Erfindung.
- Fig. 3c: zeigt eine vormontierte Baugruppe, umfassend zwei Haltesegmente der Halteeinrichtungen und eine Verbindungseinrichtung der Stabilisierungsanordnung gemäß dem dritten Ausführungsbeispiel der Erfindung.
- Fig. 3d: zeigt eine perspektivische Ansicht eines Ausschnitts eines Wellschlauchs und eine Stabilisierungsanordnung gemäß dem dritten Ausführungsbeispiel der Erfindung im unverbundenen Zustand.
- Fig. 3e: zeigt eine perspektivische Ansicht eines Ausschnitts eines Wellschlauchs und die Stabilisierungsanordnung gemäß dem dritten Ausführungsbeispiel der Erfindung im verbundenen Zustand.
- Fig. 4a: zeigt ein Haltesegment einer Halteeinrichtung einer Stabilisierungsanordnung gemäß einem vierten Ausführungsbeispiel der Erfindung.
- Fig. 4b: zeigt eine Stabilisierungsanordnung gemäß dem vierten Ausführungsbeispiel der Erfindung im verbundenen Zustand.
- Fig. 4c: zeigt eine perspektivische Ansicht eines Abschnitts eines Wellschlauchs mit der Stabilisierungsanordnung gemäß dem vierten Ausführungsbeispiel der Erfindung im verbundenen Zustand.
- Fig. 5a: zeigt ein Haltesegment einer Halteeinrichtung einer Stabilisierungsanordnung gemäß einem fünften Ausführungsbeispiel der Erfindung.
- Fig. 5b: zeigt eine Verbindungseinrichtung der Stabilisierungsanordnung gemäß dem fünften Ausführungsbeispiel der Erfindung.
- Fig. 5c: zeigt eine vormontierte Baugruppe, umfassend drei Haltesegmente und zwei Verbindungseinrichtungen der Stabilisierungsanordnung gemäß dem fünften Ausführungsbeispiel der Erfindung.
- Fig. 5d: zeigt eine perspektivische Ansicht eines Abschnitts eines Wellschlauchs mit der Stabilisierungsanordnung gemäß dem fünften Ausführungsbeispiel der Erfindung im unverbundenen Zustand.
- Fig. 5e: zeigt eine perspektivische Ansicht eines Abschnitts eines Wellschlauchs mit der Stabilisierungsanordnung gemäß dem fünften Ausführungsbeispiel der Erfindung im verbundenen Zustand.
- Fig. 6a: zeigt eine vergrößerte perspektivische Ansicht einer Verbindungsstelle eines Halteabschnitts einer Halteeinrichtung mit zwei Verbindungsabschnitten von Verbindungseinrichtungen einer Stabilisierungsanordnung gemäß einem sechsten Ausführungsbeispiel der Erfindung.
- Fig. 6b: zeigt eine Draufsicht auf die Verbindungsstelle aus Fig. 6a.
- Fig. 6c: zeigt einen Ausschnitt eines Wellschlauchs mit der Stabilisierungsanordnung gemäß dem sechsten Ausführungsbeispiel der Erfindung im verbundenen Zustand.
- Fig. 7a: zeigt eine perspektivische Ansicht einer Stabilisierungsanordnung gemäß einem siebten Ausführungsbeispiel der Erfindung im verbundenen Zustand.
- Fig. 7b: zeigt eine perspektivische Ansicht eines Abschnitts eines Wellschlauchs mit der Stabilisierungsanordnung gemäß dem siebten Ausführungsbeispiel der Erfindung im verbundenen Zustand.
- Fig. 7c: zeigt eine weitere perspektivische Ansicht eines Abschnitts eines Wellschlauchs mit der Stabilisierungsanordnung gemäß dem siebten Ausführungsbeispiel der Erfindung im verbundenen Zustand.
- Fig. 7d: zeigt eine seitliche Ansicht eines Abschnitts eines Wellschlauchs mit der Stabilisierungsanordnung gemäß dem siebten Ausführungsbeispiel der Erfindung im verbundenen Zustand.
- Fig. 8a: zeigt eine perspektivische Ansicht einer Stabilisierungsanordnung gemäß einem achten Ausführungsbeispiel der Erfindung im verbundenen Zustand.
- Fig. 8b: zeigt eine perspektivische Ansicht eines Abschnitts eines Wellschlauchs mit einer Stabilisierungsanordnung gemäß dem achten Ausführungsbeispiel der Erfindung im verbundenen Zustand.
- Fig. 9: zeigt eine perspektivische Ansicht eines Abschnitts eines Wellschlauchs mit einer Stabilisierungsanordnung gemäß einem neunten Ausführungsbeispiel der Erfindung im verbundenen Zustand.
- Fig. 10a: zeigt eine perspektivische Ansicht eines Abschnitts eines Wellschlauchs mit einer Stabilisierungsanordnung gemäß einem zehnten Ausführungsbeispiel der Erfindung im verbundenen Zustand.
- Fig. 10b: zeigt eine vergrößerte Ansicht eines Abschnitts der Fig. 10a.
- Fig. 11: zeigt eine perspektivische Ansicht eines Abschnitts eines Wellschlauchs mit einer Stabilisierungsanordnung gemäß einem elften Ausführungsbeispiel der vorliegenden Erfindung im verbundenen Zustand.
- Fig. 12a: zeigt ein Haltesegment einer Halteeinrichtung einer Stabilisierungsanordnung gemäß einem zwölften Ausführungsbeispiel der Erfindung.
- Fig. 12b: zeigt eine Verbindungseinrichtung der Stabilisierungsanordnung gemäß dem zwölften Ausführungsbeispiel der Erfindung.
- Fig. 12c: zeigt eine perspektivische Ansicht eines Abschnitts eines Wellschlauchs mit der Stabilisierungsanordnung gemäß dem zwölften Ausführungsbeispiel der vorliegenden Erfindung im unverbundenen Zustand.
- Fig. 12d: zeigt eine vergrößerte Ansicht eines Abschnitts der Fig. 12c.
- Fig. 13a: zeigt eine perspektivische Ansicht eines Abschnitts eines Wellschlauchs mit einer Stabilisierungsanordnung gemäß einem dreizehnten Ausführungsbeispiel der vorliegenden Erfindung im verbundenen Zustand.
- Fig. 13b: zeigt eine vergrößerte Ansicht eines Abschnitts aus Fig. 13a.
- Fig. 14: zeigt eine perspektivische Ansicht eines Abschnitts eines Wellschlauchs mit einer Stabilisierungsanordnung gemäß einem vierzehnten Ausführungsbeispiel der vorliegenden Erfindung im verbundenen Zustand.
- Fig. 15a: zeigt eine Stabilisierungsanordnung gemäß einem fünfzehnten Ausführungsbeispiel der vorliegenden Erfindung im verbundenen Zustand.
- Fig. 15b: zeigt eine perspektivische Ansicht eines Abschnitts eines Wellschlauchs mit einer Stabilisierungsanordnung gemäß dem fünfzehnten Ausführungsbeispiel der vorliegenden Erfindung im verbundenen Zustand.
- Fig. 15c: zeigt eine andere Ansicht eines Abschnitts eines Wellschlauchs mit der Stabilisierungsanordnung gemäß dem fünfzehnten Ausführungsbeispiel der vorliegenden Erfindung im verbundenen Zustand.
- Fig. 15d: zeigt eine seitliche Ansicht eines Abschnitts eines Wellschlauchs mit der Stabilisierungsanordnung gemäß dem fünfzehnten Ausführungsbeispiel der vorliegenden Erfindung im verbundenen Zustand.

### Detaillierte Beschreibung der Zeichnungen

Die Erfindung betrifft eine Stabilisierungsanordnung 1 für einen Wellschlauch 2, umfassend: zumindest zwei Halteeinrichtungen 11, wobei jede der zwei Halteeinrichtungen 11 derart anordnungsbar ist, dass sie den Wellschlauch 2 in Umfangsrichtung des Wellschlauchs 2 zumindest abschnittsweise umgibt, und zumindest eine Verbindungseinrichtung 12, welche mit jeder der zwei Halteeinrichtungen 11 verbindbar ist, um die Halteeinrichtungen 11 quer zur Umfangsrichtung des Wellschlauchs 2 zu verbinden.

### 1. Ausführungsbeispiel

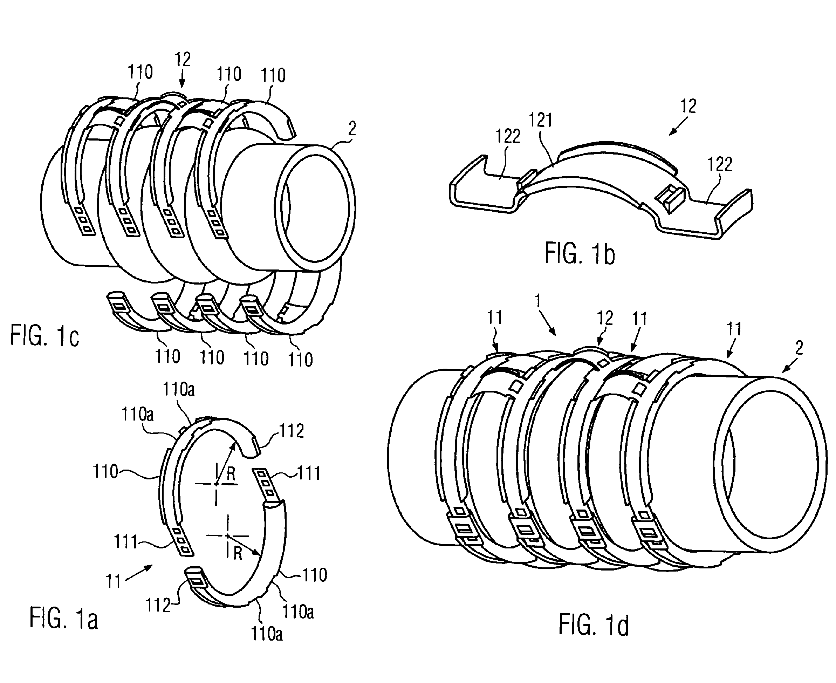

Fig. 1 a zeigt eine Halteeinrichtung 11 einer Stabilisierungsanordnung 1 gemäß einem ersten Ausführungsbeispiel der Erfindung.

Die Halteeinrichtung 11 umfasst zwei identische, bogenförmige bzw. halbkreisförmige Haltesegmente 110 mit einem ersten Eingriffsabschnitt 111 und einem zweiten Eingriffsabschnitt 112. Die Haltesegmente 110 sind vorzugsweise aus einem steifen bzw. starren Material, vorzugsweise Kunststoff oder Metall, gefertigt. Die ersten und zweiten Eingriffsabschnitte 111 und 112 sind an entgegengesetzten Enden der Haltesegmente 110 angeordnet, so dass benachbarte Haltesegmente 110 miteinander verbindbar sind. Der erste Eingriffsabschnitt 111 ist als im Wesentlichen streifenförmiger Steg ausgebildet, der sich im Wesentlichen tangential an ein Ende des Haltesegments 110 anschließt. Der Eingriffsabschnitt 111 weist insgesamt drei im Wesentlichen quadratische Ösen auf, in die ein Eingriffselement (nicht dargestellt) des Eingriffsabschnitts 112 eingreifen kann, um den Innenumfang der Halteeinrichtung 11 in drei Stufen zu verstellen. Der Eingriffsabschnitt 112 umfasst vorzugsweise einen Feder-/Rastabschnitt, der federnd bzw. rastend in die Ösen des Eingriffsabschnitts 111 eingreift bzw. einrastet. Die beiden Haltesegmente 110 sind wie in Fig. 1d gezeigt, derart zusammenfügbar, dass sie einen im Wesentlichen geschlossenen Ring bilden. Die Haltesegmente 110 weisen einen im Wesentlichen rinnenförmigen Querschnitt bzw. ein im Wesentlichen U-förmiges Profil auf, das radial zu einer Krümmungsachse eines jeden Haltesegments 110 nach außen geöffnet ist. In der das U-Profil bildenden Wand des Haltesegments 110 sind an der Außenseite Lagerstellen bzw. Einkerbungen 110a vorgesehen, in welchen Verbindungsabschnitte 122 einer im Folgenden beschriebenen Verbindungseinrichtung 12 der Stabilisierungsanordnung 1 des ersten Ausführungsbeispiels der Erfindung anordnungsbar und festlegbar sind.

Fig. 1b zeigt eine perspektivische Ansicht einer Verbindungseinrichtung 12 der Stabilisierungsanordnung 1 gemäß dem ersten Ausführungsbeispiel der Erfindung. Die Verbindungseinrichtung 12 umfasst einen bogenförmig gewölbten Rücken 121 mit einem rinnenförmigen bzw. im Wesentlichen U-förmigen Querschnittsprofil und endseitig an den Rücken 121 anschließenden Verbindungsabschnitten 122 in Form von Flügeln mit einem rinnenförmigen bzw. U-förmigen Querschnittsprofil, wobei die Rinnen der Verbindungsabschnitte 122 senkrecht zur Rinne des Rückens 121 verlaufen.

Fig. 1c zeigt eine perspektivische Ansicht eines Abschnitts eines Wellschlauchs 2 mit der Stabilisierungsanordnung 1 gemäß dem ersten Ausführungsbeispiel der Erfindung im unverbundenen Zustand. Mehrere bzw. vier parallel zueinander angeordnete Haltesegmente 110 werden über mehrere bzw. drei Verbindungseinrichtungen 12 zu einer Vormontagebaugruppe verbunden. Die Verbindungsabschnitte 122 weisen ein auf die Haltesegmente 110 abgestimmtes Querschnittsprofil auf, wobei jeweils ein Verbindungsabschnitt 122 mit einem Haltesegment 110 an einer Lagerstelle 110a derart zusammenfügbar ist, dass die Position der Verbindungseinrichtung 12 gegenüber dem jeweiligen Haltesegment 110 festgelegt ist. An einem Haltesegment 110 sind, wie in Fig. 1a dargestellt, jeweils zwei Lagerstellen 110a vorgesehen. Vorzugsweise ist der Verbindungsabschnitt 122 von der Innenseite oder der Außenseite des Haltesegments 110, in einer radialen Richtung zur Krümmungsachse des Haltesegments 110 gesehen, mit dem Haltesegment 110 verbindbar bzw. auf das Haltesegment 110 aufsteckbar. Zwei derart zusammengefügte Vormontagebaugruppen, jeweils umfassend eine Vielzahl bzw. vier Haltesegmente 110 und eine Vielzahl bzw. drei Verbindungseinrichtungen 12, sind entgegengesetzt um den Wellschlauch anordnungsbar und zu der Stabilisierungsanordnung 1 des ersten Ausführungsbeispiels der Erfindung zusammenfügbar.

Fig. 1d zeigt eine perspektivische Ansicht eines Abschnitts des Wellschlauchs 2 mit der darauf angeordneten Stabilisierungsanordnung 1 gemäß dem ersten Ausführungsbeispiel der Erfindung. Bestimmungsgemäß sind die Halteeinrichtungen 11 jeweils in Wellentälern 21 zwischen zwei benachbarten Wellenbergen 22 des Wellschlauchs 2 angeordnet und die Verbindungseinrichtungen 12 verbinden zwei benachbarte Halteeinrichtungen 11 bei Überbrückung des dazwischenliegenden Wellenbergs 22.

### 2. Ausführungsbeispiel

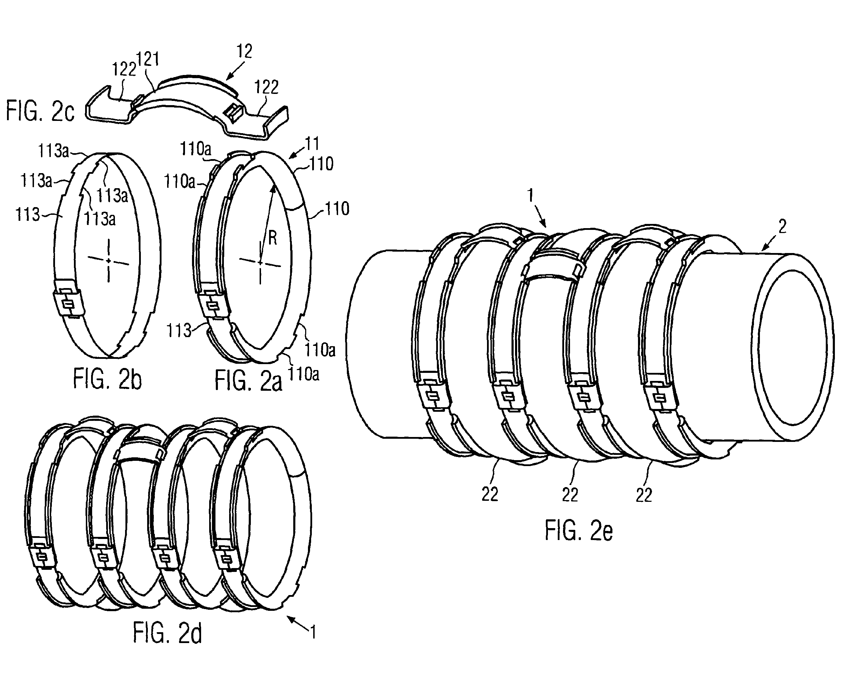

Fig. 2a zeigt eine Halteeinrichtung 11 der Stabilisierungsanordnung 1 gemäß dem zweiten Ausführungsbeispiel der Erfindung. Die Halteeinrichtung 11 umfasst zwei im Wesentlichen bogenförmige bzw. im Wesentlichen halbkreisförmige Haltesegmente 110 mit einem zur Außenseite geöffneten, rinnenförmigen bzw. U-förmigen Querschnittsprofil. Die Haltesegmente 110 sind vorzugsweise aus einem steifen bzw. starren Material, vorzugsweise Kunststoff oder Metall, gefertigt. Die beiden Haltesegmente 110 sind, wie in Fig. 2a gezeigt, derart zusammenfügbar, dass sie einen im Wesentlichen geschlossenen Ring bilden. Die Halteeinrichtung 11 umfasst ferner ein bandförmiges Halteelement 113, dessen Breite auf das rinnenförmige bzw. U-förmige Querschnittsprofil der bogenförmigen Haltesegmente 110 abgestimmt ist und welches derart anordnungsbar ist, dass es die bogenförmigen Haltesegmente 110 umschließt und einen geschlossenen Ring um die bogenförmigen Haltesegmente 110 bildet. Vorzugsweise ist das Halteelement 113 ein streifenförmiges Textil-, Kunststoff- oder Metallband, wobei die Enden des Halteelements 113 vorzugsweise lösbar miteinander verbindbar sind und beispielsweise vercrimpt, verrastet oder festgeklemmt werden können oder dergleichen. Am Rand des Halteelementes 113 sind Lagerstellen bzw. Einkerbungen 113a vorgesehen, welche auf die Einkerbungen 110a der Haltesegmente 110 abgestimmt anordnungsbar sind. Die Einkerbungen 113a des Halteelements 113 dienen in Verbindung mit den Lagerstellen bzw. Einkerbungen 110a der Haltesegmente 110 dazu, die Verbindungsabschnitte 122 der Verbindungseinrichtung 12 zwischen dem Halteelement 113 und jeweils einem der Haltesegmente 110 der Position nach festzulegen.

Die Verbindungseinrichtung 12 der Stabilisierungsanordnung 1 ist in Fig. 2c dargestellt. Die Verbindungseinrichtung 12 der Stabilisierungsanordnung 1 gemäß dem zweiten Ausführungsbeispiel entspricht der Verbindungseinrichtung 12 der Stabilisierungsanordnung 1 gemäß dem ersten Ausführungsbeispiel, weshalb auf eine Wiederholung der Beschreibung verzichtet wird.

Fig. 2d zeigt eine Stabilisierungsanordnung 1 gemäß dem zweiten Ausführungsbeispiel der Erfindung im verbundenen Zustand. Insgesamt vier Halteeinrichtungen 11 sind mittels mehrerer Verbindungseinrichtungen 12 verbunden. Die Halteeinrichtungen 11 sind derart zusammengefügt, dass jeweils zwei bogenförmige Haltesegmente 110 einen im Wesentlichen geschlossenen Ring bilden, wobei das Halteelement 113 jeweils in der rinnenförmigen Vertiefung der bogenförmigen Haltesegmente 110 angeordnet ist, um die Haltesegmente 110 zu schließen und einen geschlossenen Ring zu bilden, wobei die Einkerbungen 113a des Halteelements 113 auf die Lagestellen bzw. Einkerbungen 110a der Haltesegmente 110 abgestimmt sind. Dabei ist jeweils ein Verbindungsabschnitt 122 einer Verbindungseinrichtung 12 zwischen dem Halteelement 113 und einem Haltesegment 110 angeordnet, wobei der Verbindungsabschnitt 122 der Verbindungseinrichtung 12 durch die Lagestellen bzw. Einkerbungen 113a des Halteelements 113 und die Einkerbungen 110a der Haltesegmente 110 der Position nach festgelegt wird. Dabei greifen die in radialer Richtung zur Krümmungsachse der Haltesegmente 110 abstehenden Flanken der Verbindungsabschnitte 122 in die Einkerbungen 113a des Halteelementes 113 ein.

Fig. 2e zeigt eine perspektivische Ansicht eines Wellschlauchs 2 mit der darauf angeordneten Stabilisierungseinrichtung 1 gemäß dem zweiten Ausführungsbeispiel der Erfindung im verbundenen Zustand.

### 3. Ausführungsbeispiel

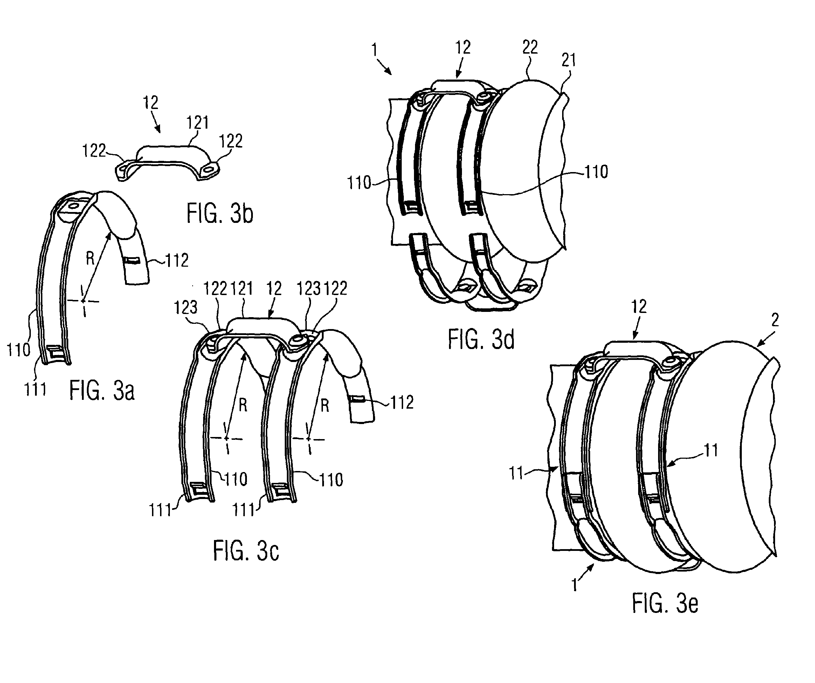

Fig. 3a zeigt ein Haltesegment 110 einer Halteeinrichtung 11 einer Stabilisierungsanordnung 1 gemäß dem dritten Ausführungsbeispiel der Erfindung. Das Haltesegment 110 ist im Wesentlichen bogenförmig bzw. halbkreisförmig ausgebildet und weist ein rinnenförmiges bzw. U-förmiges, radial nach außen geöffnetes Querschnittsprofil auf. Das Haltesegment 110 umfasst erste und zweite bzw. männliche und weibliche Eingriffsabschnitte 111 und 112, die mit den jeweils ergänzenden ersten und zweiten bzw. männlichen und weiblichen Eingriffsabschnitten 111, 112 eines benachbarten Haltesegments 110 zusammenfügbar sind. Zwei benachbarte Haltesegmente 110 sind zu einem geschlossenen Ring verbindbar, wobei die Endabschnitte der benachbarten Haltesegmente 110 überlappend anordnungsbar sind, so dass die ersten und zweiten bzw. männlichen und weiblichen Eingriffsabschnitte 111, 112 in Eingriff bringbar sind. Im vorliegenden Fall sind die Haltesegmente 110 nach Haken-Öse-Prinzip miteinander zu einem geschlossenen Ring verbindbar, wobei der erste bzw. männliche Eingriffsabschnitt 111 als ein radial zur Außenseite des Haltesegments 110 frei geschnittener, einteilig mit dem Haltesegment 110 ausgebildeter Vorsprung ausgebildet ist, und der zweite bzw. weibliche Eingriffsabschnitt 112 als eine im Wesentlichen schlitzförmige Öffnung mit quadratischem Umriss ausgebildet ist, deren Kontur auf den männlichen Eingriffsabschnitt 111 im Wesentlichen abgestimmt ist, so dass der männliche Eingriffsabschnitt 111 in dem weiblichen Eingriffsabschnitt 112 nach Haken-Öse-Prinzip einhängbar ist. Die Stabilisierungsanordnung 1 ist so zwischen einer Lösestellung, in welcher die Verbindung der Haltesegmente 110 untereinander lösbar ist, und einer Sicherungsstellung, in welcher die Verbindung der Haltesegmente 110 untereinander gesichert ist, überführbar. Dabei befindet sich die Stabilisierungsanordnung 1 in der Sicherungsstellung, wenn eine einen Innenumfang der Stabilisierungsanordnung 1 vergrößernde Kraft auf die Stabilisierungsanordnung 1 ausgeübt wird, und in der Lösestellung, wenn eine einen Innenumfang der Stabilisierungsanordnung 1 verkleinernde Kraft auf die Stabilisierungsanordnung 1 ausgeübt wird.

Fig. 3b zeigt eine Verbindungseinrichtung 12 der Stabilisierungsanordnung 1 gemäß dem dritten Ausführungsbeispiel der Erfindung. Die Verbindungseinrichtung 12 umfasst einen gewölbten Rücken 121 und zwei sich endseitig an den Rücken anschließende, flächige und näherungsweise rautenförmige Verbindungsabschnitte 122 mit mittiger Öffnung. Die im Wesentlichen ebenen, rautenförmigen Verbindungsabschnitte 122 sind jeweils mit einer radial von der Außenseite des Haltesegments 110 zugänglichen Anlagefläche in Anlage bringbar, so dass die kreisförmige Öffnung des Verbindungsabschnitts 122 über einer kreisförmigen Öffnung im flächigen Anlageabschnitt des Haltesegments 110 anordnungsbar ist.

Fig. 3c zeigt eine vormontierte Baugruppe, umfassend zwei parallel zueinander angeordnete, bogenförmige Haltesegmente 110, die über eine Verbindungseinrichtung 12 miteinander verbunden sind. Dabei sind die flächigen, rautenförmigen Verbindungsabschnitte 122 jeweils an dem flächigen Anlageabschnitt eines Haltesegments 110 in Anlage gebracht, wobei ein Verbindungselement 123 in die übereinander angeordneten und aufeinander abgestimmten Öffnungen des Verbindungsabschnitts 122 und des Anlageabschnitts des Haltesegments 110 eingefügt und gegen Herausziehen gesichert ist. Vorzugsweise wird das Verbindungselement 123 beim Einfügen in die Öffnungen des Verbindungsabschnitts 122 und des Anlageabschnitts des Haltesegments 110 selbsttätig gesichert. Der flächige Anlageabschnitt des Haltesegments 110 ist gegenüber der Innenseite des Haltesegments 110 erhöht, so dass das Verbindungselement 123 im verbundenen Zustand den flächigen Anlageabschnitt des Haltesegments 110 hintergreifen kann, ohne in radialer Richtung über den Innendurchmesser des Haltesegments 110 hervorzustehen, d.h. ohne Druckstellen am Umfang des Wellschlauchs 2 zu hinterlassen.

Fig. 3d zeigt eine perspektivische Ansicht eines Abschnitts eines Wellschlauchs 2 mit der Stabilisierungsanordnung 1 gemäß dem dritten Ausführungsbeispiel der Erfindung im unverbundenen Zustand, wobei zwei Vormontagebaugruppen gemäß Fig. 3c entgegengesetzt um den Umfang des Wellschlauchs 2 angeordnet sind.

Fig. 3e zeigt eine perspektivische Ansicht eines Abschnitts eines Wellschlauchs 2 mit der darauf angeordneten Stabilisierungsanordnung 1 gemäß dem 3. Ausführungsbeispiel der Erfindung im verbundenen Zustand.

### 4. Ausführungsbeipiel

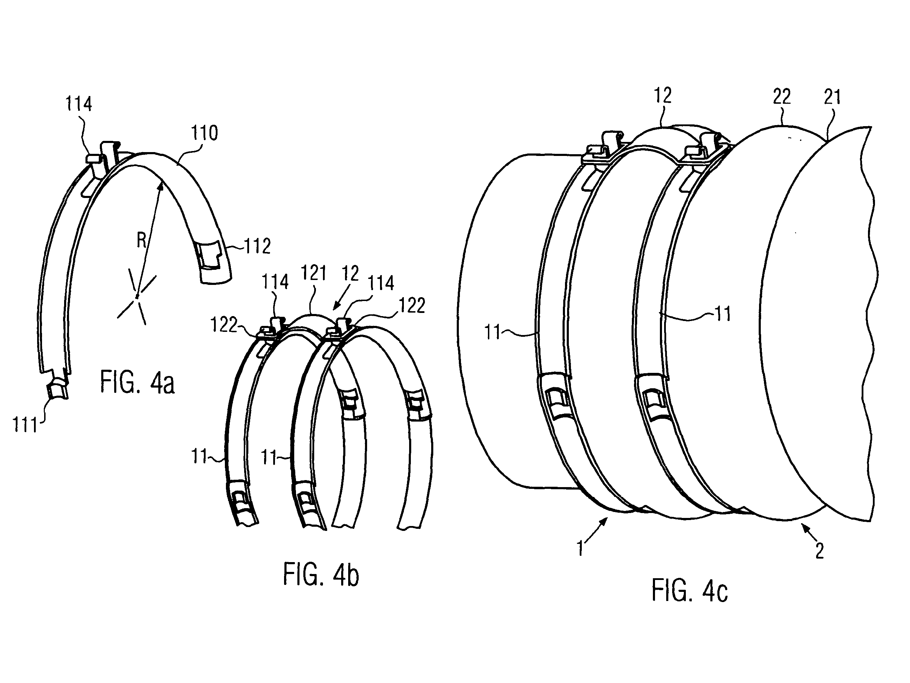

Fig. 4a zeigt ein Haltesegment 110 einer Halteeinrichtung 11 einer Stabilisierungsanordnung 1 gemäß dem vierten Ausführungsbeispiel der Erfindung. Das Haltesegment 110 ist im Wesentlichen bogenförmig bzw. halbkreisförmig ausgebildet und weist ein rinnenförmiges bzw. U-förmiges Querschnittsprofil auf, und ist aus einem im wesentlichen starren bzw. steifen Material, vorzugsweise Kunststoff oder Metall, gefertigt. Das Haltesegment 110 weist erste und zweite bzw. männliche und weibliche Eingangsabschnitte 111, 112 auf, wobei die Eingangsabschnitte 111, 112 benachbarter Haltesegmente 110 miteinander in Eingriff bringbar sind, um diese miteinander zu verbinden, so dass sie einen geschlossenen Ring bilden. Der erste bzw. männliche Eingriffsabschnitt 111 ist als freigeschnittener, im Wesentlichen schwalbenschwanzförmiger Vorsprung ausgebildet, der in eine im Wesentlichen T-förmige Öffnung des zweiten bzw. weiblichen Eingriffsabschnitts 112 eines benachbarten Haltesegments 110 nach Haken-Öse-Prinzip einhängbar ist. Die ersten und zweiten bzw. männlichen und weiblichen Eingriffsabschnitte 111, 112 wirken in solcher Weise zusammen, dass wenn eine Kraft aufgebracht wird, um den Innenumfang der einen geschlossenen Ring bildenden Haltesegmente 110 zu vergrößern, der in die Öffnung des zweiten Eingriffsabschnitts 112 eingesetzte Eingriffsabschnitt 111 nach Haken-Öse-Prinzip fest im zweiten Eingriffsabschnitt 112 eingehängt wird. Die Stabilisierungsanordnung 1 ist so zwischen einer Lösestellung, in welcher die Verbindung der Haltesegmente 110 untereinander lösbar ist, und einer Sicherungsstellung, in welcher die Verbindung der Haltesegmente 110 untereinander gesichert ist, überführbar. Dabei befindet sich die Stabilisierungsanordnung 1 in der Sicherungsstellung, wenn eine einen Innenumfang der Stabilisierungsanordnung 1 vergrößernde Kraft auf die Stabilisierungsanordnung 1 ausgeübt wird, und in der Lösestellung, wenn eine einen Innenumfang der Stabilisierungsanordnung 1 verkleinernde Kraft auf die Stabilisierungsanordnung 1 ausgeübt wird. In der Mitte des Haltesegments 110 stehen in radialer Richtung zur Krümmungsachse des Haltesegments 110 an der Außenseite zwei Rücken-an-Rücken angeordnete, im Wesentlichen hakenförmige Vorsprünge hervor, die einteilig mit dem Haltesegment 110 ausgebildet und aus dem Material des Haltesegments 110 freigeschnitten sind. Die Vorsprünge definieren einen federnden Halteabschnitt bzw. Federabschnitt 114, auf welchen ein Verbindungsabschnitt 122 einer Verbindungseinrichtung 12 der Stabilisierungsanordnung 1 gemäß dem vierten Ausführungsbeispiel der Erfindung selbstsichernd aufsteckbar ist.

Fig. 4b zeigt einen Ausschnitt einer Stabilisierungsanordnung 1 gemäß dem vierten Ausführungsbeispiel der Erfindung im verbundenen Zustand. Die Verbindungseinrichtung 12 umfasst einen gewölbten bzw. im Wesentlichen bogenförmigen Rücken 121 und sich endseitig anschließende Verbindungsabschnitte 122, die sich flächig erstrecken und jeweils eine im Wesentlichen rechteckförmige Öffnung aufweisen. Die Verbindungseinrichtung 12 ist vorzugsweise aus einem Kunststoff bzw. Metall-, bzw. Blechstreifen geformt bzw. freigeschnitten. Die Öffnungen der Verbindungsabschnitte 122 der Verbindungseinrichtung 12 sind so dimensioniert, dass die Öffnungsränder beim Aufsetzen der Verbindungseinrichtung 12 auf den Halteabschnitt 114 die gebogenen freiliegenden Kanten der Vorsprünge des Halteabschnitts 114 verdrängen und die Vorsprünge zusammendrücken, wobei die Vorsprünge des Halteabschnitts 114 auf Grund der federnden Eigenschaften zurückspringen, nachdem der Verbindungsabschnitt 122 über die führenden Kanten der Vorsprünge geschoben wurde. Wird die Verbindungseinrichtung 12 nach dem Aufstecken auf einen Halteabschnitt 114 eines Haltesegments 110 in radialer Richtung zur Krümmungsachse des Haltesegments 110 nach außen bewegt, so bleiben die Verbindungsabschnitte 122 unter den Vorsprüngen des Halteabschnitts 114 hängen, so dass eine selbsttätige Sicherung verwirklicht ist. Der Verbindungszustand der Haltesegmente 110 untereinander sowie der Verbindungszustand der Verbindungseinrichtung 12 mit den Halteeinrichtungen 11 ist anschaulich in Fig. 4b dargestellt.

Fig. 4c zeigt eine perspektivische Ansicht des Ausschnitts eines Wellschlauchs 2 mit der darauf angeordneten Stabilisierungsanordnung 1 gemäß dem vierten Ausführungsbeispiel der Erfindung im verbundenen Zustand.

### 5. Ausführungsbeispiel

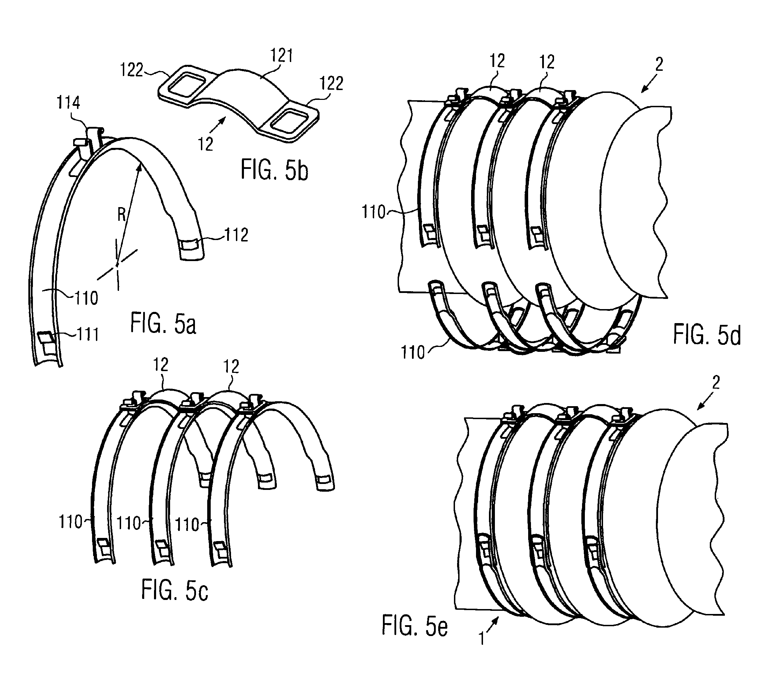

Fig. 5a zeigt ein Haltesegment 110 einer Halteeinrichtung 11 einer Stabilisierungsanordnung 1 gemäß einem fünften Ausführungsbeispiel der Erfindung. Das Haltesegment 110 ist im Wesentlichen bogenförmig bzw. halbkreisförmig aus Kunststoff oder Metall ausgebildet und weist die ersten und zweiten bzw. männlichen und weiblichen Eingriffsabschnitte 111, 112 gemäß dem dritten Ausführungsbeispiel und den Halteabschnitt 114 gemäß dem vierten Ausführungsbeispiel auf. Die Haltesegmente 110 werden untereinander verbunden, wie im Zusammenhang mit dem dritten Ausführungsbeispiel beschrieben wurde. Die Verbindungseinrichtung 12 wird mit jedem Haltesegment 110 jeder zu verbindenden Halteeinrichtung 11 in einer Art und Weise verbunden, wie im Zusammenhang mit dem vierten Ausführungsbeispiel der Erfindung beschrieben wurde. Hinsichtlich der Funktionsweise der Eingriffsabschnitte 111, 112 und der Funktionsweise des Halteabschnitts 114 wird daher auf die Beschreibung zum dritten bzw. vierten Ausführungsbeispiel der Erfindung Bezug genommen.

Fig. 5b zeigt die Verbindungseinrichtung 12 gemäß dem vierten und fünften Ausführungsbeispiel der vorliegenden Erfindung. Hinsichtlich der Verbindungseinrichtung 12 wird auf die Beschreibung zum vierten Ausführungsbeispiel der Erfindung Bezug genommen.

Fig. 5c zeigt eine vormontierte Baugruppe bzw. Vormontagebaugruppe, umfassend drei parallel zueinander angeordnete Haltesegmente 110 aus Fig. 5a, die mit zwei Verbindungseinrichtungen 12 gemäß Fig. 5b in einer Art und Weise verbunden sind, wie im Zusammenhang mit dem vierten Ausführungsbeispiel der Erfindung beschrieben wurde. Der Halteabschnitt 114 des mittleren Haltesegments 110 ist mit den Verbindungsabschnitten 122 zweier Verbindungseinrichtungen 12 verbunden.

Fig. 5d zeigt eine perspektivische Ansicht eines Wellschlauchs 2 mit der Stabilisierungsanordnung 1 gemäß dem fünften Ausführungsbeispiel der Erfindung im unverbundenen Zustand. Zwei Vormontagebaugruppen gemäß Fig. 5c sind entgegengesetzt um den Wellschlauch 2 angeordnet.

Fig. 5e zeigt eine perspektivische Ansicht eines Wellschlauchs 2 mit der Stabilisierungsanordnung 1 gemäß dem fünften Ausführungsbeispiel der Erfindung im verbundenen Zustand. Die Haltesegmente 110 der Halteeinrichtungen 11 sind durch den Eingriff der ersten und zweiten bzw. männlichen und weiblichen Eingriffsabschnitte 111, 112 in einer Art und Weise verbunden, wie im Zusammenhang mit dem dritten Ausführungsbeispiel der Erfindung erläutert wurde. Die Halteeinrichtungen 11 sind durch die Verbindungseinrichtungen 12 in einer Art und Weise verbunden, wie im Zusammenhang mit dem vierten Ausführungsbeispiel der Erfindung beschrieben wurde.

### 6. Ausführungsbeispiel

Das sechste Ausführungsbeispiel der Erfindung betrifft eine Variante des Halteabschnitts 114 gemäß dem vierten oder fünften Ausführungsbeispiel der vorliegenden Erfindung. Die Halteeinrichtung 11 umfasst bogenförmige Haltesegmente 110, wie in den vorangegangenen Ausführungsbeispielen, die zu einem geschlossenen Ring bzw. zu einem im Wesentlichen geschlossenen Ring verbindbar sind. Die Haltesegmente 110 können erste und zweite bzw. männliche und weibliche Eingriffsabschnitte 111, 112 aufweisen und/oder mit einem Halteelement 113 gemäß dem zweiten Ausführungsbeispiel zusammengehalten werden.

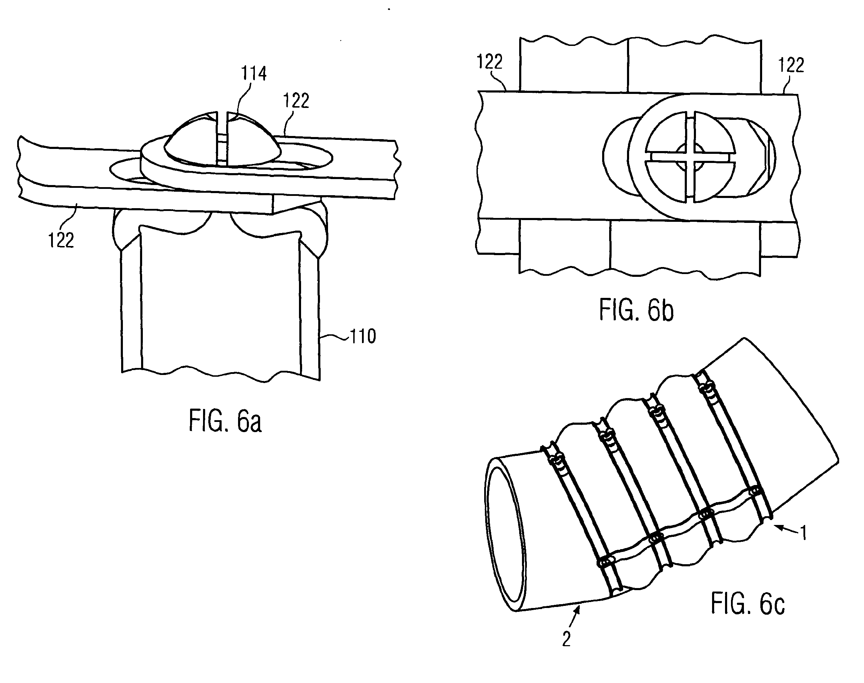

Jedes Haltesegment 110 umfasst einen federnden Halteabschnitt 114 im Wesentlichen entsprechend zu dem vierten oder fünften Ausführungsbeispiel. Im Unterschied zu dem vierten oder fünften Ausführungsbeispiel wird der Halteabschnitt 114 gebildet durch einteilig an das Haltesegment 110 angeformte bzw. fest mit dem Haltesegment 110 verbundene Vorsprünge, die vom Rand des Haltesegments 110 bzw. vom Rand des rinnenförmigen bzw. U-förmigen Querschnittsprofils ausgehend gebogen sind, um aufeinander zuzulaufen und gemeinsam einen im Wesentlichen pilzförmigen Kopf zu bilden. Fig. 6a zeigt eine perspektivische Ansicht eines Abschnitts eines Haltesegments 110 mit angeformtem Halteabschnitt 114 und zwei aufgesteckten Verbindungsabschnitten 122, die zu entsprechend geformten Verbindungseinrichtungen 12 der Stabilisierungsanordnung 1 gemäß dem sechsten Ausführungsbeispiel der Erfindung gehören. Wie in den vorangegangenen Ausführungsbeispielen weist die Verbindungseinrichtung 12 einen im Wesentlichen bogenförmigen, gewölbten Rücken 122 und sich endseitig anschließende, flächige Verbindungsabschnitte 122 auf, wobei die Verbindungsabschnitte 122 eine im Wesentlichen ovale Öffnung aufweisen, wie in der Draufsicht in Fig. 6b gezeigt ist. Die ovale Öffnung des Verbindungsabschnitts 122 weist eine geringfügig kleinere Breite auf als der pilzförmige Kopf des Halteabschnitts 114 auf. Der pilzförmige Kopf des Halteabschnitts 114 ist kreuzförmig geschlitzt und wird beim Aufstecken des Verbindungsabschnitts 122 derart zusammengedrückt, dass der pilzförmige Kopf des Halteabschnitts 114 durch die ovale Öffnung des Verbindungsabschnitts 122 passt. Nachdem der Verbindungsabschnitt 122 den pilzförmigen Kopf des Halteabschnitts 114 überwunden hat, federt der Halteabschnitt 114 auf Grund seiner Federkraft selbsttätig zurück und sichert den Verbindungsabschnitt 122 selbsttätig an dem Haltesegment 110. Auf den Halteabschnitt 114 sind, wie in Fig. 6a gezeigt, zumindest zwei Verbindungsabschnitte 122 aufsteckbar. Der Spalt zwischen dem Verbindungsabschnitt 114 und dem rinnenförmigen Querschnittsprofil des Haltesegments 110 ist, wie im zweiten Ausführungsbeispiel der Erfindung, z.B. von einem Halteelement 113 durchsetzbar.

Fig. 6c zeigt eine perspektivische Ansicht eines Wellschlauchs 2 mit der darauf angeordneten Stabilisierungsanordnung 1 gemäß dem sechsten Ausführungsbeispiel der Erfindung im verbundenen Zustand. Die Haltesegmente 110 der Halteeinrichtung 11 sind untereinander beispielsweise so verbunden, wie in einem der vorangegangenen Ausführungsbeispiele der Erfindung beschrieben wurde. Die Verbindungseinrichtungen 12 sind mit den Halteeinrichtungen 11 in der zuvor beschriebenen Art und Weise verbunden, wobei die Verbindungsabschnitte 122 der Verbindungseinrichtung 12 jeweils auf einen pilzförmigen Kopf eines Halteabschnitts 114 eines Haltesegments 110 aufgesteckt sind.

### 7. Ausführungsbeispiel

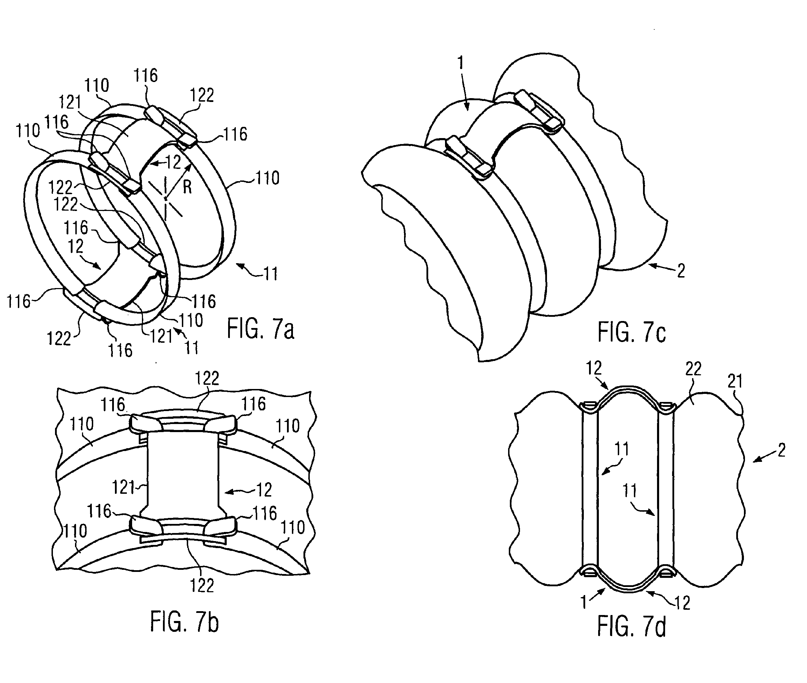

Das siebte Ausführungsbeispiel der Erfindung betrifft eine besonders bevorzugte Ausführung der Erfindung. Fig. 7a zeigt eine Stabilisierungsanordnung 1 gemäß dem siebten Ausführungsbeispiel der Erfindung im verbundenen Zustand. Die Halteeinrichtung 11 umfasst zwei im Wesentlichen bogenförmige Haltesegmente 110 mit einem im Wesentlichen rinnenförmigen bzw. U-förmigen Querschnittsprofil, das vorzugsweise auf die Wellung des Wellschlauchs 2 abgestimmt ist. Die Haltesegmente 110 umfassen endseitig U-förmige Haken 116, die im Wesentlichen radial zur Krümmungsachse jedes Haltesegments 110 nach außen und rückwärts gebogen sind.

Die Verbindungseinrichtung 12 der Stabilisierungsanordnung 1 gemäß dem siebten Ausführungsbeispiel der Erfindung umfasst einen bogenförmigen, gewölbten Rücken 122 und sich endseitig anschließende, im Wesentlichen flächige Verbindungsabschnitte 122 mit jeweils einer im Wesentlichen schlitzförmigen Öffnung mit rechteckigem Umriß. Wie in Fig. 7a dargestellt, sind die endseitigen Haken 116 der Haltesegmente 110 durch die schlitzförmige Öffnung in den Verbindungsabschnitt 122 einhängbar, so dass der Haken 116 den Öffnungsrand des Verbindungsabschnitts 122 umgreift. Bei Aufbringung einer Kraft, welche die Haltesegmente 110 in einem mit den Verbindungseinrichtungen 12 verbundenen Zustand, wie in Fig. 7a gezeigt, voneinander beabstandet, werden die Haken 116 gegen den Öffnungsrand des Verbindungsabschnitts 122 gezogen, so dass die Verbindung gesichert wird. Bei Aufbringen einer Kraft auf die Haltesegmente 110, welche die zwei Haltesegmente 110 einer Halteeinrichtung 11 gegeneinander bewegt, sind die Haken 116 aus der Öffnung des Verbindungsabschnitts 122 entnehmbar, so dass die Haltesegmente 110 und der Verbindungsabschnitt 122 außer Eingriff gebracht werden können. Die Stabilisierungsanordnung 1 ist so zwischen einer Lösestellung, in welcher die Verbindung zumindest einer der Halteeinrichtungen 11 gegenüber der Verbindungseinrichtung 12 lösbar ist, und einer Sicherungsstellung, in welcher die Verbindung der zumindest einen der Halteeinrichtungen 11 gegenüber der Verbindungseinrichtung 12 gesichert ist, überführbar. Dabei befindet sich die Stabilisierungsanordnung 1 in der Sicherungsstellung, wenn eine einen Innenumfang der Stabilisierungsanordnung 1 vergrößernde Kraft auf die Stabilisierungsanordnung 1 ausgeübt wird, und in der Lösestellung, wenn eine einen Innenumfang der Stabilisierungsanordnung 1 verkleinernde Kraft auf die Stabilisierungsanordnung 1 ausgeübt wird. Generell sind die Haltesegmente 110 nach Haken-Öse-Prinzip mit der Verbindungseinrichtung 12 in Eingriff bringbar, wobei jeweils eine Verbindungseinrichtung 12 die vier Haltesegmente 110 der Stabilisierungsanordnung 1 gemäß dem siebten Ausführungsbeispiel der Erfindung miteinander verbindet. Die Stabilisierungsanordnung 1 des siebten Ausführungsbeispiels der Erfindung umfasst insgesamt zwei Verbindungseinrichtungen 12 und vier Haltesegmente 110 mit jeweils der oben beschriebenen Struktur. Die Verbindungseinrichtungen 12 verbinden die Haltesegmente 110 sowohl in Umfangsrichtung der Haltesegmente 110 zu einem geschlossenen Ring, als auch quer dazu, d.h. parallel zu einer Krümmungsachse der Haltesegmente 110, zu einer geschlossenen Einheit.

Fig. 7b zeigt eine perspektivische Ansicht eines Abschnitts eines Wellschlauchs 2 mit darauf angeordneter Stabilisierungsanordung 1 gemäß dem siebten Ausführungsbeispiel der Erfindung im verbundenen Zustand. Anschaulich ist dargestellt, wie sich die Haltesegmente 110 der Halteeinrichtung 11 mit der Verbindungseinrichtung 12 nach Haken-Öse-Prinzip in Eingriff befinden.

Fig. 7c zeigt eine perspektivische Ansicht eines Wellschlauchs 2 mit darauf angeordneter Stabilisierungsanordnung 1 gemäß dem siebten Ausführungsbeispiel der Erfindung im verbundenen Zustand.

Fig. 7d zeigt eine seitliche Ansicht eines Abschnitts eines Wellschlauchs 2 mit darauf angeordneter Stabilisierungsanordnung 1 gemäß dem siebten Ausführungsbeispiel der Erfindung im verbundenen Zustand. Bestimmungsgemäß sind die Haltesegmente 110 der Halteeinrichtung 11 in den Wellentälern 21 des Wellschlauchs 2 angeordnet, wobei das rinnenförmige bzw. U-förmige Querschnittsprofil der Haltesegmente 110 auf die Wellung des Wellschlauchs 2 im Bereich eines Wellentals 21 abgestimmt ist. Bestimmungsgemäß sind die Verbindungseinrichtungen 12 im verbundenen Zustand auf gegenüberliegenden Seiten des Wellschlauchs 2 angeordnet und verbinden die vier Haltesegmente 110 der Stabilisierungsanordnung 11 sowohl in Umfangsrichtung des Wellschlauchs 2 als auch quer zur Umfangsrichtung des Wellschlauchs 2, d.h. parallel zur Achsrichtung des Wellschlauchs 2, jeweils bei Überbrückung eines zwischen zwei Wellentälern 21 angeordneten Wellenbergs 22. Die Wölbung bzw. Krümmung des Rückens 121 einer Verbindungseinrichtung 12 ist im Wesentlichen auf die Krümmung bzw. Wölbung des Wellschlauchs 2 im Bereich eines Wellenbergs 22 abgestimmt, wobei die Verbindungseinrichtung 12 den Wellschlauch 2 im unbelasteten Zustand des Wellschlauchs 2 gerade nicht berührt.

### 8. Ausführungsbeispiel

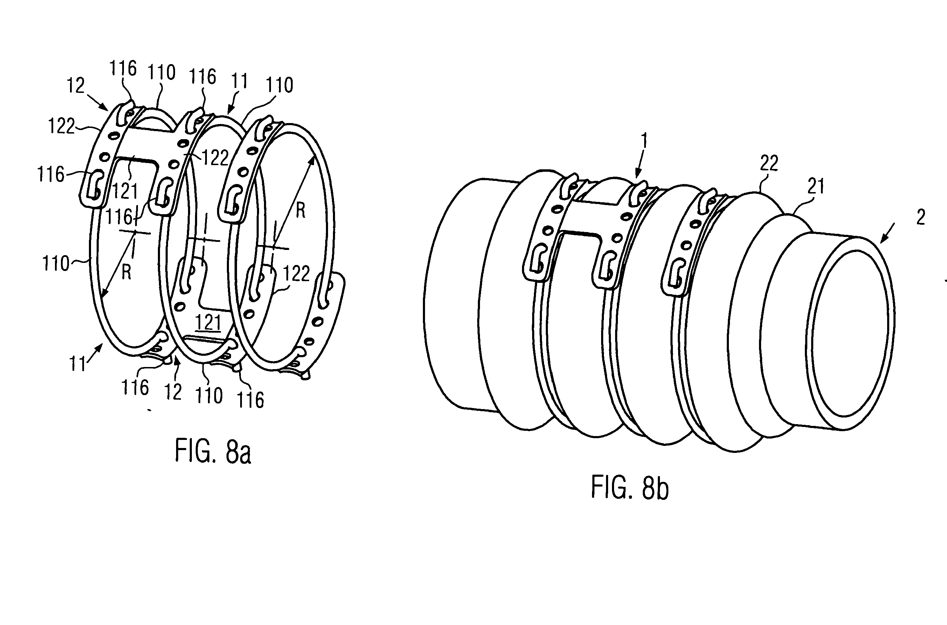

Fig. 8a zeigt eine Stabilisierungsanordnung 1 gemäß dem achten Ausführungsbeispiel der Erfindung im verbundenen Zustand. Der Stabilisierungsanordnung 1 ist eine weitere Stabilisierungseinrichtung beigeordnet, wobei zwei im Wesentlichen bogenförmige Haltesegmente 110 mit zwei Verbindungselementen in Umfangsrichtung zusammengehalten werden.

Die Halteeinrichtung 11 der Stabilisierungsanordnung 1 gemäß dem achten Ausführungsbeispiel der Erfindung umfasst zwei im Wesentlichen bogenförmige bzw. halbkreisförmige Haltesegmente 110 mit einem im Wesentlichen kreisförmigen Querschnittsprofil, wobei die Enden der Haltesegmente 110, ausgehend von der Krümmungsachse nach außen U-förmig gebogen sind, um Haken 116 auszubilden. Die Haltesegmente 110 sind aus einem strangförmigen Körper, vorzugsweise aus einem Metalldraht, geformt.

Die Verbindungseinrichtung 12 der Stabilisierungsanordnung 1 gemäß dem achten Ausführungsbeispiel der Erfindung umfasst einen im Wesentlichen bogenförmig gewölbten Rücken 121 und zwei sich jeweils senkrecht zum Rücken 121 erstreckende Verbindungsabschnitte 122, die mit einer Vielzahl von kreisförmigen Öffnungen versehen sind. Die Verbindungsabschnitte 122 weisen ein im Wesentlichen rinnenförmiges bzw. U-förmiges Querschnittsprofil auf. Die Kontur der Verbindungsabschnitte 122 ist im Wesentlichen auf die Kontur eines Wellschlauchs 2 abgestimmt. Insgesamt weist die Verbindungseinrichtung 12 der Stabilisierungsanordnung 1 gemäß dem achten Ausführungsbeispiel der Erfindung eine im Wesentlichen H-förmige Gestalt auf. Die Verbindungseinrichtung 12 ist aus einem im Wesentlichen starren bzw. steifen Material, vorzugsweise Kunststoff, Metall oder Blech geformt. Die Verbindungseinrichtung 12 der Stabilisierungsanordnung 1 gemäß dem achten Ausführungsbeispiel ist, wie in Fig. 8b gezeigt, derart anordnungsbar, dass sich die Verbindungsabschnitte 122 in Umfangsrichtung des Wellschlauchs 2 in benachbarten Wellentälern 21 erstrecken, wobei der Rücken 121 der Verbindungseinrichtung 12 den dazwischenliegenden Wellenberg 22 überbrückt, vorzugsweise ohne den Wellschlauch 2 dabei zu berühren. Die endseitigen Haken 116 der Haltesegmente 110 sind in den Ösen der Verbindungsabschnitte 122 einhängbar, so dass die Haltesegmente 110 mit der Verbindungseinrichtung 12 nach Haken-Öse-Prinzip verbindbar sind, um gemeinsam einen geschlossenen Ring um den Umfang des Wellschlauchs 2 zu bilden. Durch die Bereitstellung mehrerer in Linie vorgesehener Ösen auf dem Verbindungsabschnitt 122, der sich bestimmungsgemäß in Umfangsrichtung des Wellschlauchs 2 erstreckt, ist eine Verstellmöglichkeit vorgesehen, so dass der Innenumfang der Stabilisierungsanordnung 1 bzw. der Innenumfang jeder Halteeinrichtung 11 stufenweise verstellbar ist. Dadurch kann die Stabilisierungsanordnung 1 bei unterschiedlichen Wellschläuchen 2 mit unterschiedlichem Außendurchmesser zum Einsatz kommen und individuell angepasst werden. Die Stabilisierungsanordnung 1 ist so im übrigen auch zwischen einer Lösestellung, in welcher die Verbindung zumindest einer der Halteeinrichtungen 11 gegenüber der Verbindungseinrichtung 12 lösbar ist, und einer Sicherungsstellung, in welcher die Verbindung der zumindest einen der Halteeinrichtungen 11 gegenüber der Verbindungseinrichtung 12 gesichert ist, überführbar. Dabei befindet sich die Stabilisierungsanordnung 1 in der Sicherungsstellung, wenn eine einen Innenumfang der Stabilisierungsanordnung 1 vergrößernde Kraft auf die Stabilisierungsanordnung 1 ausgeübt wird, und in der Lösestellung, wenn eine einen Innenumfang der Stabilisierungsanordnung 1 verkleinernde Kraft auf die Stabilisierungsanordnung 1 ausgeübt wird.

Fig. 8b zeigt eine perspektivische Ansicht eines Abschnitts eines Wellschlauchs 2 mit der Stabilisierungsanordnung 1 gemäß dem achten Ausführungsbeispiel der Erfindung im verbundenen Zustand. Der Stabilisierungsanordnung 1 ist eine Stabilisierungseinrichtung beigeordnet, umfassend zwei zuvor beschriebene Haltesegmente, die mit zwei streifenförmigen, mit Ösen versehenen Verbindungselementen zu einem Umfang des Wellschlauchs 2 geschlossenen Ring zusammengefügt werden.

### 9. Ausführungsbeispiel

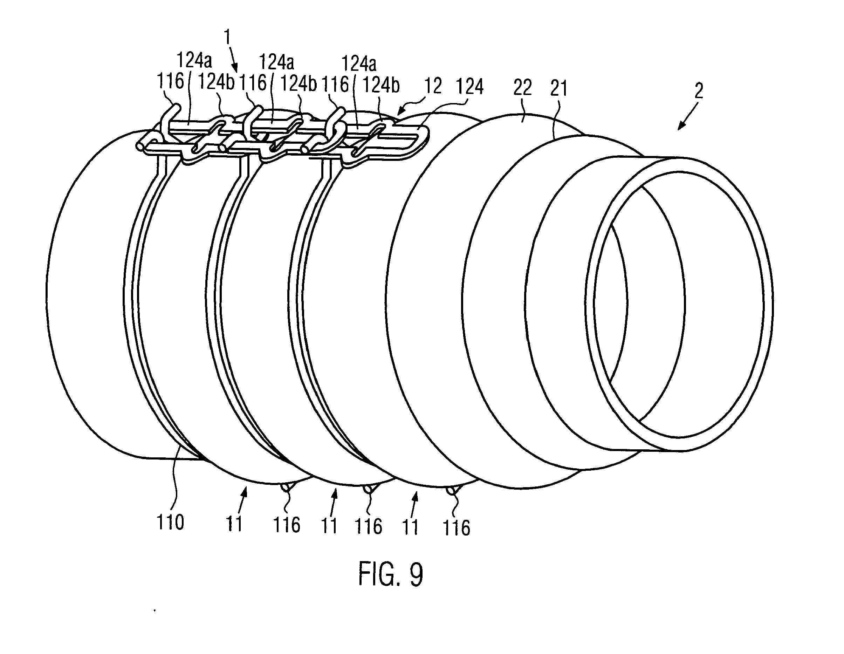

Fig. 9 zeigt eine perspektivische Ansicht eines Wellschlauchs 2 mit einer darauf angeordneten Stabilisierungsanordnung 1 gemäß einem neunten Ausführungsbeispiel der Erfindung im verbundenen Zustand. Jede Halteeinrichtung 11 umfasst bogenförmige Haltesegmente 110 wie im achten Ausführungsbeispiel, die mit einer Verbindungseinrichtung 12 gemäß dem neunten Ausführungsbeispiel nach Haken-Öse-Prinzip verbindbar sind, um einen geschlossenen Ring um den Umfang des Wellschlauchs 2 zu bilden. Die Ausgestaltung der Haken 116 an den Enden der Haltesegmente 110 kann dabei geringfügig unterschiedlich sein als im achten Ausführungsbeispiel. Die Verbindungseinrichtung 12 weist erste und zweite Abschnitte 124a, 124b auf, wobei die Stabilisierungsanordnung 1 einen kleineren Innenumfang aufweist, wenn die Haltesegmente 110 mit den ersten Abschnitten 124a verbunden sind bzw. die Haken 116 in den ersten Abschnitten 124a angeordnet sind, und einen größeren Innenumfang aufweist wenn die Haltesegmente 110 mit den zweiten Abschnitten 124b verbunden sind bzw. die Haken in den zweiten Abschnitten 124b angeordnet sind. Der Innenumfang der Stabilisierungsanordnung 1 ist somit durch Bewegung der Verbindungseinrichtung 12 gegenüber einer der Halteeinrichtungen 11 veränderbar, wie im Folgenden genauer erläutert wird. Die Verbindungseinrichtung 12 gemäß dem neunten Ausführungsbeispiel der Erfindung ist im Wesentliche eben und streifenförmig ausgebildet und weist eine mittige Schlitzöffnung 124 auf. Die Schlitzöffnung 124 erstreckt sich in schmalen und breite Abschnitten 124a, 124b der Verbindungseinrichtung 12, wobei die Haken 116 der Haltesegmente 110 nach Haken-Öse-Prinzip sowohl in den schmalen Abschnitten 124a als auch in den breiten Abschnitten 124b anordnungsbar bzw. einhängbar sind, wie in Fig. 9 anschaulich dargestellt ist. Wenn die Haken 116 in den schmalen Abschnitten 124a der Verbindungseinrichtung 12 angeordnet sind, liegen die Haken 116 der Haltesegmente 110 der Halteeinrichtung 11 näher beisammen, so dass der Innenumfang der Halteeinrichtung 11 kleiner ist, als wenn die Haken 116 in den breiten Abschnitten 124b der Verbindungseinrichtung 12 angeordnet und damit weiter voneinander beabstandet sind. Da die Verbindungseinrichtung 12 bestimmungsgemäß derart angeordnet ist, dass sich die Schlitzöffnung 124 im Wesentlichen quer zur Umfangsrichtung des Wellschlauchs 2 bzw. parallel zur Längsachse des Wellschlauchs 2 erstreckt und eine Vielzahl von schmalen bzw. breiten Abschnitten 124a, 124b aufweist, die kontinuierlich ineinander übergehen, ist der Innenumfang der Stabilisierungsanordnung 1 bzw. der Innenumfang jeder Halteeinrichtung 11 durch Bewegung der Verbindungseinrichtung 12 gegenüber den Halteeinrichtungen 11 bzw. den Haltesegmenten 110 im verbundenen Zustand der Halteeinrichtungen 11 und der Verbindungseinrichtung 12 stufenweise verstellbar. Die breiten Abschnitte 124b umfassen dabei von der Schlitzöffnung 124 ausgehende, seitliche Ausbuchtungen, wobei die seitlichen Ausbuchtungen der breiten Abschnitte 124b zueinander einen Abstand aufweisen, der dem Abstand zwischen zwei benachbarten Wellentälern 21 des Wellschlauchs 2 entspricht. Das heißt, dass zugleich alle Haken 116 der Haltesegmente 110, die bestimmungsgemäß in den Wellentälern 21 des Wellschlauchs 2 angeordnet sind, zugleich entweder in den schmalen Abschnitt 124a oder zugleich in den breiten Abschnitten 124b der Verbindungseinrichtung 12 angeordnet sind und damit identische Innenumfänge aufweisen.

### 10. Ausführungsbeispiel

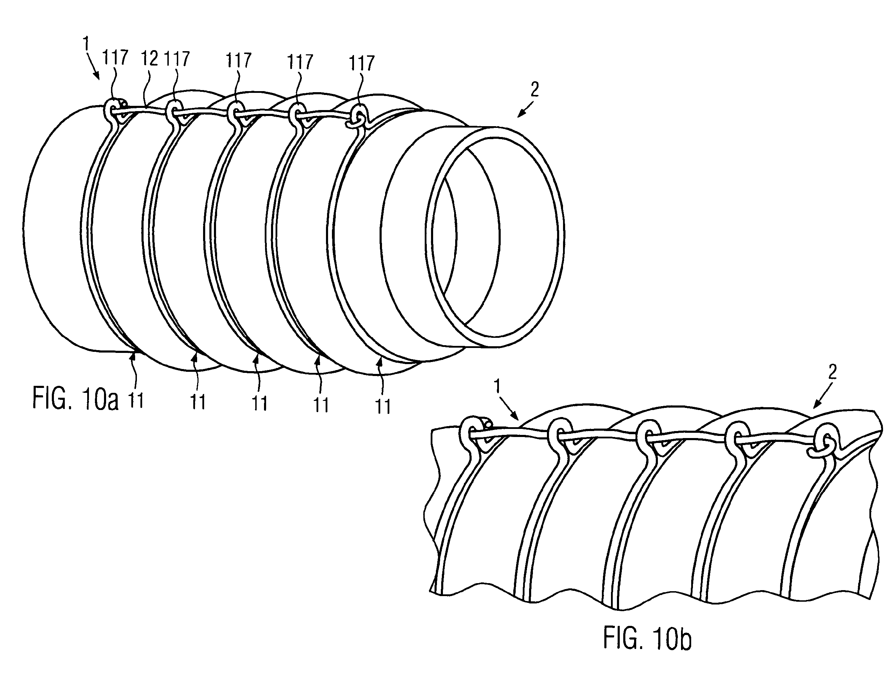

Fig. 10a zeigt eine perspektivische Ansicht eines Wellschlauchs 2 mit darauf angeordneter Stabilisierungsanordnung 1 gemäß dem zehnten Ausführungsbeispiel der Erfindung im verbundenen Zustand. Jede Halteeinrichtung 11 bildet einen im Wesentlichen geschlossenen Ring und weist an gegenüberliegenden, um 180° zur Ringachse versetzten Positionen nach außen in radialer Richtung zur Ringachse vorstehende Schlaufen bzw. Ösenabschnitte 117 auf, die aus dem Material der Halteeinrichtung 11 gebogen sind und einteilig mit der Halteeinrichtung 11 ausgebildet bzw. fest mit der Halteeinrichtung 11 verbunden sind. Die Halteeinrichtung 11 wird vorzugsweise aus einem Metalldraht gefertigt. Jede Schlaufe 117 der Halteeinrichtung 11 ist von der vorzugsweise drahtförmig ausgebildeten Verbindungseinrichtung 12 gemäß dem zehnten Ausführungsbeispiel der Erfindung durchsetzbar.

Die Verbindungseinrichtung 12 gemäß dem 10. Ausführungsbeispiel der Erfindung umfasst vorzugsweise einen Metalldraht und ist damit vorzugsweise aus demselben Material gefertigt wie jede der Halteeinrichtungen 11, was die Fertigungskosten und die Bereitstellungskosten für Material verringert.

Die Halteeinrichtungen 11 sind vorzugsweise in den Wellentälern 21 des Wellschlauchs 2 angeordnet, wobei der Innenumfang jeder Halteeinrichtung 11 auf den jeweiligen Innenumfang des Wellschlauchs 2 in den Wellentälern 21 abgestimmt ist, d.h. dass die Krümmung jeder Halteeinrichtung 11 im Wesentlichen auf die Krümmung des Wellschlauchs 2 im Bereich der Wellentäler 21 abgestimmt ist. Die Halteeinrichtungen 11 werden vorzugsweise unter Zusammenknautschen des Wellschlauchs 2 auf den Wellschlauch 2 aufgeschoben, so dass mehrere, vorzugsweise fünf Halteeinrichtungen 11, in benachbarten Wellentälern 21 des Wellschlauchs 2 parallel zueinander angeordnet sind. Dabei sind die als Schlaufen ausgebildeten Ösenabschnitte 117 der Halteeinrichtungen 11 jeweils derart ausgerichtet, dass sie, wie in Fig. 10a gezeigt, von der strang- bzw. drahtförmigen Verbindungseinrichtung 12 in gerader Linie durchsetzbar sind.

Fig. 10b zeigt eine vergrößerte Ansicht aus Fig. 10a. Die Verbindungseinrichtung 12 durchsetzt und umgreift die Ösenabschnitte 117 der beiden äußersten Halteeinrichtungen 11 und durchsetzt die Ösenabschnitte 117 der zwischen den beiden äußersten Halteabschnitten 11 vorgesehenen Halteabschnitte 11. Die Zahl der zwischen den beiden äußeren Halteabschnitten 11 vorgesehenen Halteabschnitte 11 kann Null betragen, wobei die maximale Anzahl nach oben hin nicht beschränkt ist. Zum Umgreifen und Durchsetzen der Ösenabschnitte 117 der beiden äußeren Halteabschnitte 11 ist die drahtförmige Verbindungseinrichtung 12 wie in Fig. 10b dargestellt, endseitig hakenförmig gebogen, so dass die Verbindungseinrichtung 12 mit den beiden äußeren Halteeinrichtungen 11 nach Haken-Öse-Prinzip verbunden ist.

### 11. Ausführungsbeispiel

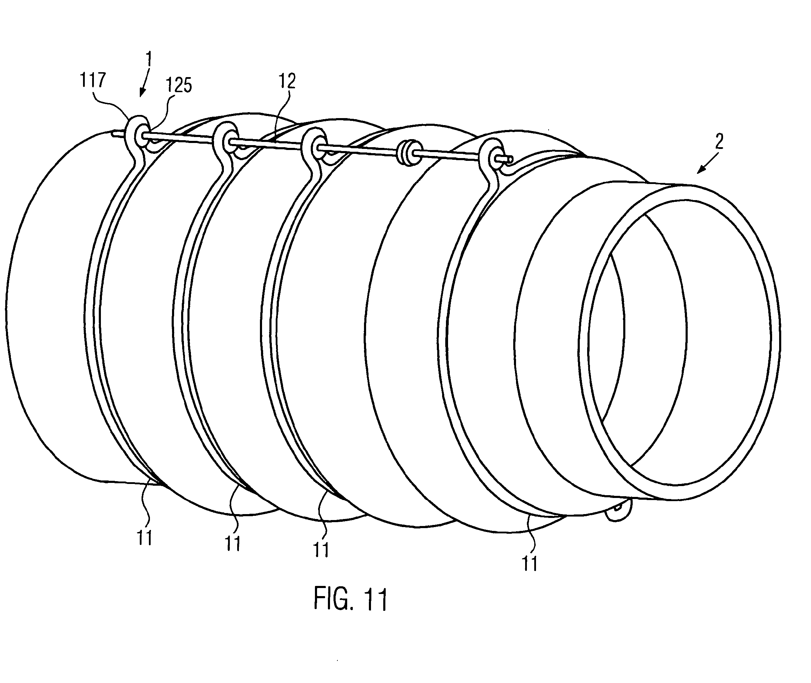

Fig. 11 zeigt eine perspektivische Ansicht eines Wellschlauchs 2 mit einer darauf angeordneten Stabilisierungsanordnung 1 gemäß dem elften Ausführungsbeispiel der Erfindung im verbundenen Zustand. Die Halteeinrichtungen 11 sind identisch zu den Halteeinrichtungen 11 gemäß dem zehnten Ausführungsbeispiel ausgebildet. Die Verbindungseinrichtung 12 ist als im Wesentlichen strangförmiges Gut, vorzugsweise als Metalldraht ausgebildet, und umfasst im Wesentlichen rollenförmige, fest mit dem Draht verbundene Verdickungen 125, die in den als Schlaufen ausgebildeten Ösenabschnitten 117 der Halteeinrichtungen 11 anordnungsbar und festlegbar sind. Die Verdickungen 125 weisen zueinander einen Abschnitt auf, der dem Abstand zweier benachbarter Wellentäler 21 des Wellschlauchs 2 entspricht. Auf diese Art und Weise sind Halteeinrichtungen 11 in beliebiger Anzahl durch die Verbindungseinrichtung 12 gemäß dem elften Ausführungsbeispiel der Erfindung kettenförmig verbindbar.

### 12. Ausführungsbeispiel

Das zwölfte Ausführungsbeispiel der Erfindung umfasst die Merkmale der dritten bzw. fünften Ausführungsbeispiele sowie die Merkmale des zehnten Ausführungsbeispiels in Kombination. Daher wird auf die Beschreibung der Ausführungsbeispiele 3, 5 und 10 im Hinblick auf die jeweiligen Merkmale Bezug genommen.

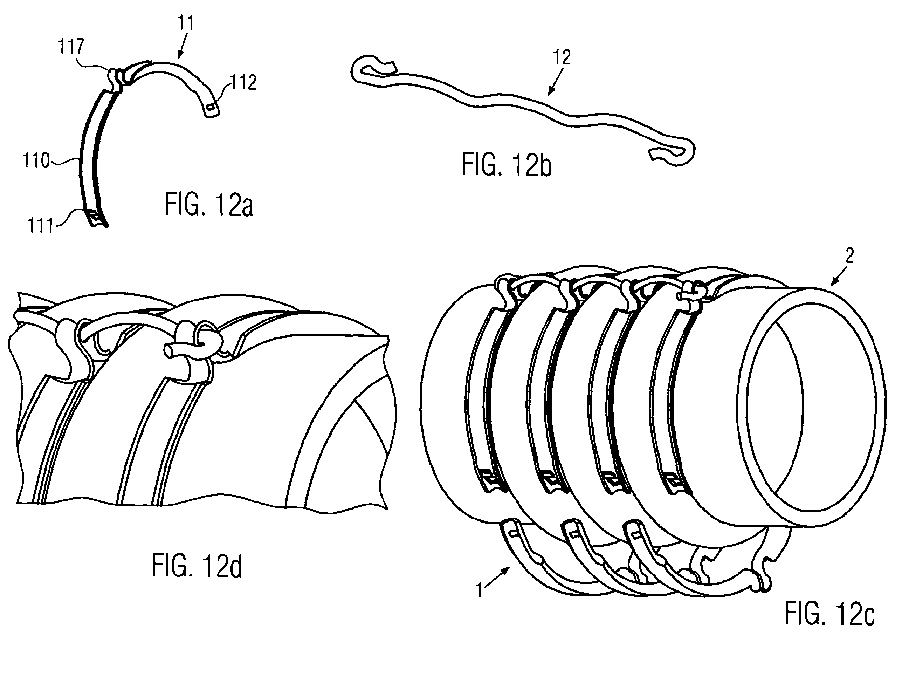

Fig. 12a zeigt ein bogenförmiges Haltesegment 110 einer Halteeinrichtung 11 gemäß dem zwölften Ausführungsbeispiel der Erfindung. Das Haltesegment 110 weist einen im wesentlichen bogenförmigen bzw. halbkreisförmigen Aufbau mit einem wesentlichen rinnenförmigen bzw. U-förmigen Querschnittsprofil auf, dessen Kontur an der Innenseite im Wesentlichen auf die Kontur eines entsprechenden Wellschlauchs 2 abgestimmt ist. Das Haltesegment 110 weist endseitig erste und zweite bzw. männliche und weibliche Eingriffsabschnitte 111, 112 auf, wobei das Haltesegment 110 mit einem benachbarten Haltesegment 110 in einer Art und Weise zu einem geschlossenen Ring verbindbar ist, wie im Zusammenhang mit dem dritten bzw. fünften Ausführungsbeispiel der Erfindung erläutert wurde. Alternativ können die beiden Haltesegmente 110 auch nach Art und Weise der Ausführungsbeispiele 1, 3, 4, 5, 7, 8 und 9 zu einem geschlossenen Ring verbunden werden. Zusätzlich weist das Haltesegment 110 einen mit einer Öse versehenen und als Schlaufe ausgebildeten Ösenabschnitt 117 nach Art des zehnten Ausführungsbeispiels auf, wobei der Ösenabschnitt 117 von einer im Wesentlichen drahtförmigen Verbindungseinrichtung 12 gemäß dem zehnten Ausführungsbeispiel durchsetzbar ist.

Fig. 12b zeigt die Verbindungseinrichtung 12 des zehnten bzw. zwölften Ausführungsbeispiels.

Fig. 12c zeigt eine perspektivische Ansicht eines Wellschlauchs 2 mit der Stabilisierungsanordnung 1 gemäß dem zwölften Ausführungsbeispiel der Erfindung im unverbundenen Zustand. Jeweils vier parallel zueinander ausgerichtete Haltesegmente 110 gemäß Fig. 12a sind mit der Verbindungseinrichtung 12 gemäß Fig. 12b zu einer Vormontagebaugruppe zusammengefügt, wobei die Verbindungseinrichtung 12 die Ösenabschnitte 117 der beiden äußeren Haltesegmente 110 durchsetzt und abschnittsweise umgreift und die Ösenabschnitte 117 der zwischenliegenden Haltesegmente 110 nur durchsetzt. Zwei baugleiche Vormontagebaugruppen sind entgegengesetzt um den Umfang des Wellschlauchs 2 anordnungsbar und miteinander verbindbar, wobei die ersten und zweiten bzw. männlichen und weiblichen Eingriffsabschnitte 111, 112 der zusammengehörigen Haltesegmente 110 nach Haken-Öse-Prinzip verbindbar und in Eingriff bringbar sind. Bezüglich der Verbindung der Haltesegmente 110 mittels erster und zweiter bzw. männlicher und weiblicher Eingriffsabschnitte 111, 112 wird auf die Beschreibung zum dritten bzw. fünften Ausführungsbeispiel der Erfindung verwiesen.

Fig. 12d zeigt eine Vergrößerung der Ansicht aus Fig. 12c, wobei anschaulich dargestellt ist, wie die Verbindungseinrichtung 12 den Ösenabschnitt 117 eines äußeren Haltesegments 110 durchsetzt und umgreift und den Ösenabschnitt 117 eines benachbarten Haltesegmentes 110 nur durchsetzt.

### 13. Ausführungsbeispiel

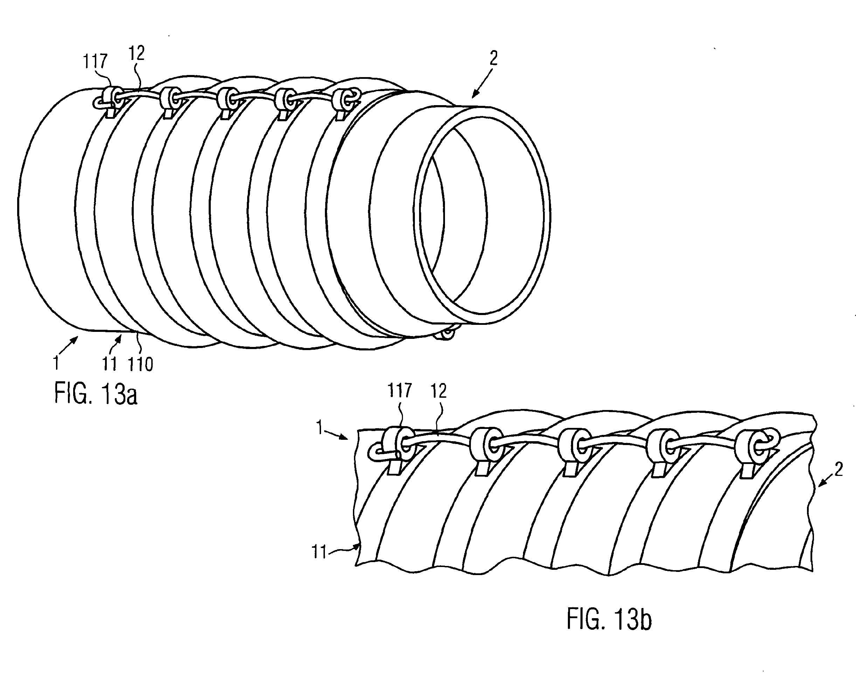

Fig. 13a zeigt eine perspektivische Ansicht eines Wellschlauchs 2 mit einer darauf angeordneten Stabilisierungsanordnung 1 gemäß dem 13. Ausführungsbeispiel der Erfindung im verbundenen Zustand. Die Stabilisierungsanordnung 1 gemäß dem 13. Ausführungsbeispiel beruht auf dem Prinzip des zehnten bzw. zwölften Ausführungsbeispiels der Erfindung und verwendet eine identische Verbindungseinrichtung 12. Die Halteeinrichtung 11 ist als geschlossener Ring ausgebildet oder kann wie im zwölften Ausführungsbeispiel aus Haltesegmenten 110 zusammengesetzt sein, die vorzugsweise erste und zweite bzw. männliche und weibliche Eingriffsabschnitte 111, 112 aufweisen und vorzugsweise nach Haken-Ose-Prinzip verbindbar sind, um einen geschlossenen Ring zu bilden. Die Halteeinrichtung 11 weist zwei Ösenabschnitte 117 auf, wobei die Öse im Wesentlichen als Durchgangsöffnung eines Hohlzylinders ausgebildet ist, der an die Halteeinrichtung 11 angeformt ist. Wie im zehnten bzw. zwölften Ausführungsbeispiel ist der Ösenabschnitt 117 von der Verbindungseinrichtung 12 durchsetzbar und umgreifbar.

Fig. 13b zeigt eine vergrößerte Ansicht der Fig. 13a. Bestimmungsgemäß werden die Halteeinrichtungen 11 in benachbarten Wellentälern 21 des Wellschlauchs 2 derart angeordnet, dass die Ösenabschnitte 117 in einer Linie aufgereiht von der Verbindungseinrichtung 12 durchsetzbar sind und die Ösenabschnitte 117 der beiden äußeren Halteeinrichtungen 11 zusätzlich von der Verbindungseinrichtung 12 zumindest abschnittsweise umgreifbar sind.

### 14. Ausführungsbeispiel

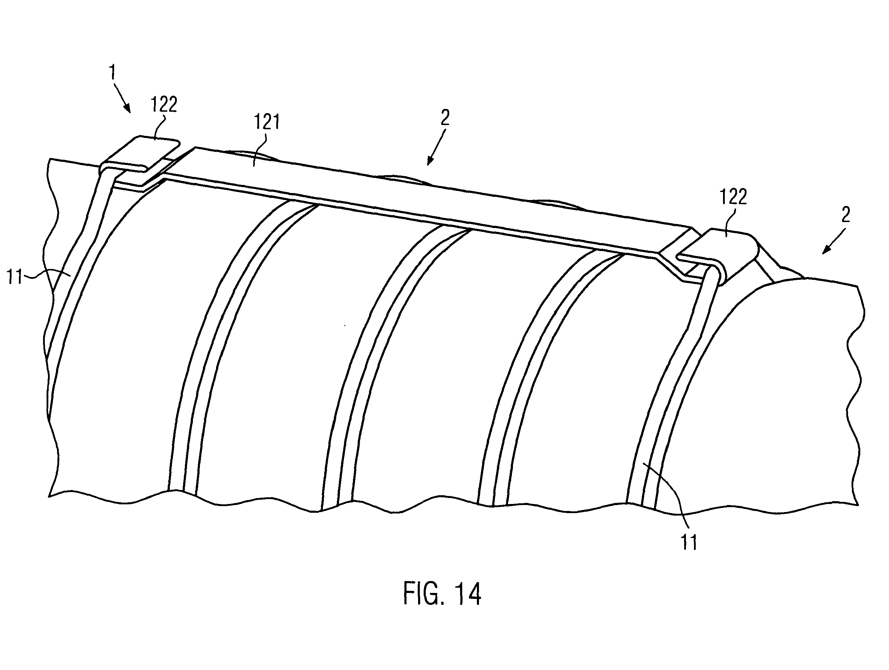

Fig. 14 zeigt einen Ausschnitt einer perspektivischen Ansicht eines Wellschlauchs 2 mit einer Stabilisierungsanordnung 1 gemäß dem 14. Ausführungsbeispiel der Erfindung. Im 14. Ausführungsbeispiel umfasst die Halteeinrichtung 11 einen geschlossenen Ring, vorzugsweise aus Metalldraht, mit zumindest einem in radialer Richtung nach außen hervorgestellten Abschnitt, der von einem hakenförmigen Verbindungsabschnitt 122 der Verbindungseinrichtung 12 zumindest abschnittsweise umgreifbar ist.

Die Verbindungseinrichtung 12 umfasst einen Rücken 121, um bestimmungsgemäß zumindest einen Wellenberg 22 des Wellschlauchs 2 überbrücken zu können und zwei sich jeweils endseitig an den Rücken 121 anschließende Verbindungsabschnitte 122. Die Verbindungsabschnitte 122 weisen ein im Wesentlichen U-förmiges Querschnittsprofil auf, wobei die schlitzförmigen Öffnungen der Verbindungsabschnitte 122 im Wesentlichen einander zugewandt sind. Die Halteeinrichtungen 11 sind mit der Verbindungseinrichtung 12 nach Haken-Öse-Prinzip verbindbar. Zwischen den beiden äußeren Halteeinrichtungen 11, deren nach außen vorgestellte Eingriffsabschnitte von den Verbindungsabschnitten 123 der Verbindungseinrichtung 12 zumindest abschnittsweise umgriffen werden, können weitere Halteeinrichtungen 11 vorgesehen sein, die nicht mit der Verbindungseinrichtung 12 verbunden sind. Die Stabilisierungsanordnung 1 ist so zwischen einer Lösestellung, in welcher die Verbindung zumindest einer der Halteeinrichtungen 11 gegenüber der Verbindungseinrichtung 12 lösbar ist, und einer Sicherungsstellung, in welcher die Verbindung der zumindest einen der Halteeinrichtungen 11 gegenüber der Verbindungseinrichtung 12 gesichert ist, überführbar ist. Dabei befindet sich die Stabilisierungsanordnung 1 in der Sicherungsstellung, wenn eine einen Abstand der Halteeinrichtungen 11 vergrößernde Kraft auf die Stabilisierungsanordnung 1 ausgeübt wird, und in der Lösestellung, wenn eine einen Abstand der Halteeinrichtungen 11 verkleinernde Kraft auf die Halteeinrichtungen 11 ausgeübt wird.

### 15. Ausführungsbeispiel

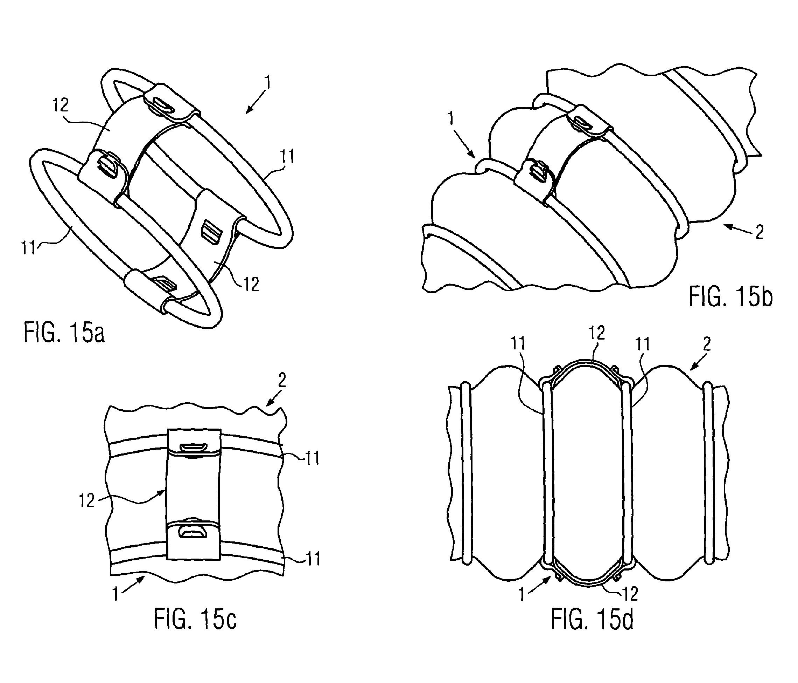

Fig. 15a zeigt eine Stabilisierungsanordnung 1 gemäß dem 15. Ausführungsbeispiel der Erfindung. Die Halteeinrichtung 11 bildet einen geschlossenen Ring, vorzugsweise aus Metalldraht mit einem vorzugsweise kreisförmigen Querschnittsprofil. Die Verbindungseinrichtung 12 ist als ein im Wesentlichen streifenförmiges Band, vorzugsweise aus Kunststoff, Textil oder Metall, ausgebildet. Fig. 15a zeigt die Stabilisierungsanordnung 1 gemäß dem 15. Ausführungsbeispiel der Erfindung im verbundenen Zustand. Zwei Halteeinrichtungen 11 sind mit zwei Verbindungseinrichtungen 12 verbunden, wobei jede Verbindungseinrichtung 12 beide Halteeinrichtungen 11 bzw. das im Wesentlichen kreisförmige Querschnittsprofil jeder der Halteeinrichtungen 11 vollständig umgreift. Aus dem Material der bandförmigen Verbindungseinrichtung 12 sind zwei Haken freigeschnitten, deren freie Enden im Wesentlichen einander zugewandt sind. An den Enden der Verbindungseinrichtung 12 sind im Wesentlichen ovalförmige Ösen vorgesehen. Bei Umgreifung einer Halteeinrichtung 11 bzw. beim Umgreifen des Querschnittsprofils einer Halteeinrichtung 11 nach Haken-Öse-Prinzip kann der mit einer Öse versehene Endabschnitt der Verbindungseinrichtung 12 in den zugehörigen Haken eingehängt werden, wie anschaulich in den Fig. 15a bis 15d dargestellt ist. Die Stabilisierungsanordnung 1 ist so zwischen einer Lösestellung, in welcher die Verbindung zumindest einer der Halteeinrichtungen 11 gegenüber der Verbindungseinrichtung 12 lösbar ist, und einer Sicherungsstellung, in welcher die Verbindung der zumindest einen der Halteeinrichtungen 11 gegenüber der Verbindungseinrichtung 12 gesichert ist, überführbar. Dabei befindet sich die Stabilisierungsanordnung 1 in der Sicherungsstellung, wenn eine einen Abstand der Halteeinrichtungen 11 vergrößernde Kraft auf die Stabilisierungsanordnung 1 ausgeübt wird, und in der Lösestellung, wenn eine einen Abstand der Halteeinrichtungen 11 verkleinernde Kraft auf die Halteeinrichtungen 11 ausgeübt wird.

Fig. 15d zeigt einen Ausschnitt einer perspektivischen Ansicht eines Wellschlauchs 2 mit der Stabilisierungsanordnung 1 gemäß dem 15. Ausführungsbeispiel der Erfindung im verbundenen Zustand.

Fig. 15c zeigt einen Ausschnitt einer weiteren perspektivischen Ansicht der Stabilisierungsanordnung 1 gemäß dem 15. Ausführungsbeispiel der Erfindung im verbundenen Zustand.

Fig. 15d zeigt eine Seitenansicht eines Abschnitts eines Wellschlauchs 2 mit darauf der Stabilisierungsanordnung 1 gemäß dem 15. Ausführungsbeispiel der Erfindung im verbundenen Zustand.

Die funktionalen Merkmale der Ausführungsbeispiele sind untereinander austauschbar und können in beliebiger Weise kombiniert werden.

## Patentansprüche

1. Stabilisierungsanordnung (1) für einen Wellschlauch (2), umfassend:
zumindest zwei Halteeinrichtungen (11), wobei jede der zwei Halteeinrichtungen (11) derart anordnungsbar ist, dass sie den Wellschlauch (2) in Umfangsrichtung des Wellschlauchs (2) zumindest abschnittsweise umgibt, und
zumindest eine Verbindungseinrichtung (12), welche mit jeder der zwei Halteeinrichtungen (11) verbindbar ist, um die Halteeinrichtungen (11) quer zur Umfangsrichtung des Wellschlauchs (2) zu verbinden.

2. Stabilisierungsanordnung (1) nach Anspruch 1, wobei die Verbindungseinrichtung (12) lösbar mit jeder der zwei Halteeinrichtungen (11) verbindbar ist.

3. Stabilisierungsanordnung (1) nach zumindest einem der vorangegangenen Ansprüche, wobei die Stabilisierungsanordnung (1) zwischen einer Lösestellung, in welcher die Verbindung zumindest einer der Halteeinrichtungen (11) gegenüber der Verbindungseinrichtung (12) lösbar ist, und einer Sicherungsstellung, in welcher die Verbindung der zumindest einen der Halteeinrichtungen (11) gegenüber der Verbindungseinrichtung (12) gesichert ist, überführbar ist.

4. Stabilisierungsanordnung (1) nach zumindest einem der vorangegangenen Ansprüche, wobei sich die Stabilisierungsanordnung (1) in der Sicherungsstellung befindet, wenn eine einen Innenumfang der Stabilisierungsanordnung (1) vergrößernde Kraft auf die Stabilisierungsanordnung (1) ausgeübt wird.

5. Stabilisierungsanordnung (1) nach zumindest einem der vorangegangenen Ansprüche, wobei sich die Stabilisierungsanordnung (1) in der Sicherungsstellung befindet, wenn eine einen Abstand der Halteeinrichtungen (11) vergrößernde Kraft auf die Halteeinrichtungen (11) ausgeübt wird.

6. Stabilisierungsanordnung (1) nach zumindest einem der vorangegangenen Ansprüche, wobei sich die Stabilisierungsanordnung (1) in der Lösestellung befindet, wenn eine einen Innenumfang der Stabilisierungsanordnung (1) verkleinernde Kraft auf die Stabilisierungsanordnung (1) ausgeübt wird.

7. Stabilisierungsanordnung (1) nach zumindest einem der vorangegangenen Ansprüche, wobei sich die Stabilisierungsanordnung (1) in der Lösestellung befindet, wenn eine einen Abstand der Halteeinrichtungen (11) verkleinernde Kraft auf die Halteeinrichtungen (11) ausgeübt wird.

8. Stabilisierungsanordnung (1) nach zumindest einem der vorangegangenen Ansprüche, wobei jede der Halteeinrichtungen (11) in einem Wellental (21) des Wellschlauchs (2) anordnungsbar ist, und wobei die Verbindungseinrichtung (12) derart anordnungsbar ist, um zumindest einen Wellenberg (22) des Wellschlauchs (2) zu überbrücken.

9. Stabilisierungsanordnung (1) nach zumindest einem der vorangegangenen Ansprüche, wobei der Innenumfang der Stabilisierungsanordnung (1) verstellbar, vorzugsweise stufenweise verstellbar ist.

10. Stabilisierungsanordnung (1) nach zumindest einem der vorangegangenen Ansprüche, wobei der Innenumfang der Stabilisierungsanordnung (1) im verbundenen Zustand der Verbindungseinrichtung (12) mit zumindest einer der Halteeinrichtungen (11) verstellbar, vorzugsweise stufenweise verstellbar ist.

11. Stabilisierungsanordnung (1) nach zumindest einem der vorangegangenen Ansprüche, wobei der Innenumfang jeder der zwei Halteeinrichtungen (11) verstellbar, vorzugsweise stufenweise verstellbar, ist.

12. Stabilisierungsanordnung (1) nach zumindest einem der vorangegangenen Ansprüche, wobei die Halteeinrichtungen (11) und die Verbindungseinrichtung (12) nach Haken-Öse-Prinzip miteinander verbindbar sind.

13. Stabilisierungsanordnung (1) nach zumindest einem der vorangegangenen Ansprüche, wobei zumindest eine der Halteeinrichtungen (11) zumindest zwei im Wesentlichen bogenförmige Haltesegmente (110) umfasst, die in Umfangsrichtung des Wellschlauchs (2) anordnungsbar sind.

14. Stabilisierungsanordnung (1) nach zumindest einem der vorangegangenen Ansprüche, wobei die Haltesegmente (110) derart anordnungsbar sind, um sich um den Wellschlauch (2) zu schließen.

15. Stabilisierungsanordnung (1) nach zumindest einem der vorangegangenen Ansprüche, wobei die Haltesegmente (110) unmittelbar miteinander verbindbar sind.

16. Stabilisierungsanordnung (1) nach zumindest einem der vorangegangenen Ansprüche, wobei die Haltesegmente (110) mittelbar über ein flexibles Halteelement (113) verbindbar sind.

17. Stabilisierungsanordnung (1) nach zumindest einem der vorangegangenen Ansprüche, wobei die Haltesegmente (110) derart anordnungsbar sind, um einen um den Umfang des Wellschlauchs (2) geschlossenen Ring zu bilden.

18. Stabilisierungsanordnung (1) nach zumindest einem der vorangegangenen Ansprüche, wobei die Haltesegmente (110) nach Haken-Öse-Prinzip miteinander verbindbar sind.

19. Stabilisierungsanordnung (1) nach zumindest einem der vorangegangenen Ansprüche, wobei die Haltesegmente (110) nach Haken-Öse-Prinzip mit der Verbindungseinrichtung (12) verbindbar sind.

20. Stabilisierungsanordnung (1) nach zumindest einem der vorangegangenen Ansprüche, wobei die Haltesegmente (110) eine auf eine Kontur des Wellschlauchs (2) im Wesentlichen abgestimmte Kontur aufweisen.

21. Stabilisierungsanordnung (1) nach zumindest einem der vorangegangenen Ansprüche, wobei die Haltesegmente (110) ein rinnenförmiges oder U-förmiges Querschnittsprofil aufweisen.

22. Stabilisierungsanordnung (1) nach zumindest einem der vorangegangenen Ansprüche, wobei die Verbindungseinrichtung (12) eine auf eine Kontur des Wellschlauchs (2) im Wesentlichen abgestimmte Kontur aufweist.

23. Stabilisierungsanordnung (1) nach zumindest einem der vorangegangenen Ansprüche, wobei ein Verbindungsabschnitt (122) der Verbindungseinrichtung (12) zwischen der Halteeinrichtung (11) und dem Wellschlauch (2) festlegbar ist.

24. Stabilisierungsanordnung (1) nach zumindest einem der vorangegangenen Ansprüche, wobei ein Verbindungsabschnitt (122) der Verbindungseinrichtung (12) zwischen einem flexiblen Halteelement (113) und einem Haltesegment (110) einer der Halteeinrichtungen (11) festlegbar ist.

25. Stabilisierungsanordnung (1) nach zumindest einem der vorangegangenen Ansprüche, wobei eine Verbindung der Verbindungseinrichtung (12) mit einer der Halteeinrichtungen (11) kraftschlüssig, reibschlüssig oder formschlüssig ist.

26. Stabilisierungsanordnung (1) nach zumindest einem der vorangegangenen Ansprüche, wobei die Verbindungseinrichtung (12) mit Hilfe eines Verbindungselementes (123) an einer der Halteeinrichtungen (12) festlegbar ist.

27. Stabilisierungsanordnung (1) nach zumindest einem der vorangegangenen Ansprüche, wobei zumindest eine der Halteeinrichtungen (11) einen Federabschnitt (114) aufweist, auf welchen ein Verbindungsabschnitt (122) der Verbindungseinrichtung (12) aufsteckbar ist.

28. Stabilisierungsanordnung (1) nach zumindest einem der vorangegangenen Ansprüche, wobei der Federabschnitt (114) einen pilzförmigen Kopf aufweist.

29. Stabilisierungsanordnung (1) nach zumindest einem der vorangegangenen Ansprüche, wobei eine Halteeinrichtung (11) mit zumindest zwei Verbindungseinrichtungen (12) verbindbar ist.

30. Stabilisierungsanordnung (1) nach zumindest einem der vorangegangenen Ansprüche, wobei zumindest zwei Verbindungsabschnitte (122) mit einem Federabschnitt (114) verbindbar sind.

31. Stabilisierungsanordnung (1) nach zumindest einem der vorangegangenen Ansprüche, wobei die Stabilisierungsanordnung (1) zwei Verbindungseinrichtungen (12) und jede der beiden Halteeinrichtungen (11) zwei bogenförmige Haltesegmente (110) umfasst, wobei jede Verbindungseinrichtung (11) mit beiden Haltesegmenten (110) der beiden Halteeinrichtungen (11) verbindbar ist.

32. Stabilisierungsanordnung (1) nach zumindest einem der vorangegangenen Ansprüche, wobei die Haltesegmente (110) der beiden Halteeinrichtungen (11) durch die Verbindungseinrichtung (12) sowohl in Umfangsrichtung des Wellschlauchs (2) als auch quer zur Umfangsrichtung des Wellschlauchs (2) verbindbar sind.

33. Stabilisierungsanordnung (1) nach zumindest einem der vorangegangenen Ansprüche, wobei die Verbindungseinrichtung (12) erste und zweite Abschnitte (124a, 124b) aufweist, wobei die Stabilisierungsanordnung (1) einen kleineren Innenumfang aufweist, wenn die Haltesegmente (110) mit den ersten Abschnitten (124a) verbunden sind, und einen größeren Innenumfang aufweist, wenn die Haltesegmente (110) mit den zweiten Abschnitten (124b) verbunden sind.

34. Stabilisierungsanordnung (1) nach zumindest einem der vorangegangenen Ansprüche, wobei der Innenumfang der Stabilisierungsanordnung (1) durch Bewegung der Verbindungseinrichtung (12) gegenüber einer der Halteeinrichtungen (11) veränderbar ist.

35. Stabilisierungsanordnung (1) nach zumindest einem der vorangegangenen Ansprüche, wobei zumindest eine der Halteeinrichtungen (11) wenigstens einen von der Verbindungseinrichtung (12) durchsetzbaren Ösenabschnitt (117) aufweist.

36. Stabilisierungsanordnung (1) nach zumindest einem der vorangegangenen Ansprüche, wobei der Ösenabschnitt (117) quer zur Umfangsrichtung des Wellschlauchs (2) von der Verbindungseinrichtung (12) durchsetzbar ist.

37. Stabilisierungsanordnung (1) nach zumindest einem der vorangegangenen Ansprüche, wobei die Verbindungseinrichtung (12) strangförmig und plastisch verformbar ausgebildet ist.

38. Stabilisierungsanordnung (1) nach zumindest einem der vorangegangenen Ansprüche, wobei die Verbindungseinrichtung (12) flexibel und/oder biegsam ausgebildet ist.

39. Stabilisierungsanordnung (1) nach zumindest einem der vorangegangenen Ansprüche, wobei die Verbindungseinrichtung (12) als Draht ausgebildet ist.

40. Stabilisierungsanordnung (1) nach zumindest einem der vorangegangenen Ansprüche, wobei die Verbindungseinrichtung (12) Abschnitte (125) aufweist, die in den Ösenabschnitten (117) der Halteeinrichtungen (11) festlegbar sind.

41. Stabilisierungsanordnung (1) nach zumindest einem der vorangegangenen Ansprüche, wobei die Verbindungseinrichtung (12) derart anordnungsbar und/oder verformbar ist, dass sie zumindest eine der Halteeinrichtungen (11) im Wesentlichen umgreift.

42. Stabilisierungsanordnung (1) nach zumindest einem der vorangegangenen Ansprüche, wobei zumindest eine der Halteeinrichtungen (11) einen geschlossenen Ring bildet.
